# EUROPEAN PATENT SPECIFICATION

(11) **EP 2 781 431 B1**
(45) Date of publication and mention of the grant of the patent: **12.04.2017**
(21) Application number: 12846666.1
(22) Date of filing: 25.10.2012
(51) Int. Cl.: B62B 7/08

(54) **FOLDABLE STROLLER**
ZUSAMMENKLAPPBARER KINDERWAGEN
POUSSETTE PLIABLE

(30) Priority: 01.11.2011 JP 2011240056; 01.11.2011 JP 2011240059; 01.11.2011 JP 2011240070; 01.11.2011 JP 2011240071; 01.11.2011 JP 2011240072; 01.11.2011 JP 2011240073
(43) Date of publication of application: 24.09.2014
(73) Proprietor: Combi Corporation, Tokyo 111-0041 (JP)
(72) Inventor: ASANO, Junichi, Saitama-shi Saitama-ken (JP); KAJIMOTO, Yohei, Saitama-shi Saitama-ken (JP); SHIMIZU, Nao, Saitama-shi Saitama-ken (JP); SONODA, Jiro, Saitama-shi Saitama-ken (JP); Tachibana, Yuichiro, Saitama-shi Saitama-ken (JP)
(74) Representative: Liesegang, Eva
(86) International application number: PCT/JP2012/077603
(87) International publication number: WO 2013/065576

(56) References cited:
- EP-A1- 1 598 257
- WO-A1-00/37297
- JP-A- H0 948 352
- JP-A- S5 486 145
- JP-A- S5 820 559
- JP-A- 2009 184 655
- JP-A- 2010 220 708
- JP-U- 3 170 838
- JP-U- H0 240 667
- JP-U- H01 154 069
- US-A- 6 139 046

## Description

### TECHNICAL FIELD

The present invention relates to a foldable stroller.

### BACKGROUND ART

There has been known a stroller capable of being deformed between an unfolded state and a folded state, by connecting right and left constituent elements of a stroller body so as to function as link mechanisms. In the stroller of this type, upper end portions of a front leg and a rear leg are connected to a front end portion of an intermediate conjunction member called "armrest". A rear end portion of the armrest is rotatably connected to a handle rod. The handle rod and the rear leg are connected to each other through an open/close locking mechanism. When the stroller in the unfolded state is seen from a right and left direction, the armrest generally extends in a back and forth direction of the stroller body, and the handle rod extends almost in parallel with the front leg at a rearward position distant from the front leg (see, for example, JP2008-174016A or WO00/37297)

### SUMMARY OF THE INVENTION

In general, a front wheel of a stroller is mounted on a front leg through a turning mechanism turnable about a vertical pivot axis line. On the other hand, in a conventional stroller, in order that a stroller body can be folded, a handle rod extends almost in parallel with a front leg at a rearward position distant from the front leg. Here, how a force is applied to a lower part of the stroller, i.e., an area in the vicinity of a ground surface on which a front wheel and a rear wheel are positioned, is examined. Since a force of a user for pushing the stroller is transmitted to the lower part of the stroller body through the handle rod, the front wheel is pushed from a position greatly distant from a pivot axis line thereof in a rearward direction of the stroller body. That is to say, the stroller is operated such that the freely turnable front wheel is pushed from the position greatly distant behind. Thus, the front wheel is likely to sway about the pivot axis line, whereby an orientation of the front wheel is unstable both when the stroller moves straight and when the stroller turns, which may impair an operation feeling of the stroller.

Therefore, one of the objects of the present invention is to provide a stroller capable of improving an operation feeling while maintaining a foldable function.

The present invention is a stroller comprising: a stroller body (2); front legs (14) disposed on both sides in a right and left direction of the stroller body (2), each having a front wheel (22) mounted thereon so as to be turnable about a predetermined pivot axis line (VA); rear legs (15) disposed on both sides in the right and left direction of the stroller body (2), each having a rear wheel (26) mounted thereon; handle rods (30) disposed on both sides in the right and left direction of the stroller body, each being configured to transmit an operation of a user to the stroller body; intermediate conjunction members (16) disposed on both sides in the right and left direction of the stroller body 2, each having one end portion that is rotatably connected to upper end portions of the respective front leg and the rear leg, and the other end portion that is rotatably connected to the handle rod; and front conjunction members (35) disposed on both sides in the right and left direction of the stroller body 2, each having one end portion that is rotatably connected to the handle rod at a position (37) lower than the connection point (34) at which the handle rod is connected to the intermediate conjunction member, and the other end portion that is rotatably connected to the front leg at a position lower than the connection point at which the front leg is connected to the intermediate conjunction member; and rear conjunction members (36) disposed on both sides in the right and left direction of the stroller body 2, each having one end portion that is rotatably connected to the handle rod at a position (39) lower than the connection point (29) at which the handle rod is connected to the intermediate conjunction member, and the other end portion that is rotatably connected to the rear leg at a position lower than the connection point at which the rear leg is connected to the intermediate conjunction member; the stroller being changeable between an unfolded state and a folded state by relatively rotating the front legs, the rear legs, the handle rods, the intermediate conjunction members, the front conjunction members and the rear conjunction members about their respective connection points; wherein: when the stroller body is seen from the right and left direction, the handle rod can be divided into two sections of an upper rod part (30b) and a lower rod part (30c) that is tilted behind with respect to an extension line (EL) of the upper rod part, with an intermediate bent part (30a) as a boundary between the upper rod part and the lower rod part; the front conjunction member and the rear conjunction member are rotatably connected to the lower rod part; and when the stroller in the unfolded state is seen from the right and left direction of the stroller body, the upper rod part, the intermediate conjunction member and the front leg are arranged linearly.

In the present invention, the handle rod can be divided into two sections of the upper rod part and the lower rod part, and the lower rod part is bent with respect to the upper rod part such that the lower rod part is tilted behind the stroller body with respect to the extension line of the upper rod part. Thus, even when a lower part of the handle rod is connected to the front leg and the rear leg through the front conjunction member and the rear conjunction member so that the handle rod is moved in conjunction with the front leg and the rear leg between the unfolded state and the folded state, the upper rod part is inclined such that the extension line thereof is along the intermediate conjunction member and the front leg whereby an operation force can be linearly transmitted from the upper rod part to the front leg through the intermediate conjunction member, while the connection portion of the lower rod part, the front conjunction member and the rear conjunction member is located within a range of the stroller body behind the extension line of the upper rod part. Thus, a force for pushing the stroller body acts in the vicinity of the pivot axis line of the front wheel or ahead thereof, whereby the front wheel is turned about the pivot axis line as if the front wheel is drawn from the front. Thus, the front wheel can be prevented from swaying about the pivot axis line, whereby an orientation of the front wheel can be made stable both when the stroller moves forward and when the stroller turns. As a result, the operation feeling of the stroller can be improved.

In one embodiment of the present invention, the upper rod part may be provided such that the extension line of the upper rod part intersects with an imaginary horizontal plane (HP) including an axle (21) of the front wheel, on the axle of the front wheel or ahead thereof. According to such a structure, a force for pushing the stroller can be reliably made to act on the axle of the front wheel or an area ahead thereof to further improve the stability of the front wheel.

The connection point (34) of the intermediate conjunction member and the handle rod may set on a side of the lower rod part. According to such a structure, since the lower rod part is tilted behind the extension line of the upper rod part, the connection point of the intermediate conjunction member and the handle rod can be brought close to the extension line of the upper rod part, whereby the linearity of the upper rod part, the intermediate conjunction member and the front leg can be more enhanced.

In one embodiment of the present invention, there may be further provided an open/close locking mechanism (41) located between at least one (36) of the front conjunction member and the rear conjunction member and the handle rod, the open/close locking mechanism being configured to switch between a state in which the handle rod and the conjunction member can be relatively rotated, and a state in which the handle rod and the conjunction member cannot be relatively rotated. According to such a structure, the stroller can be restrained in the unfolded state or in the folded state by using the open/close locking mechanism.

In the above embodiment, a lower pin (37) for connecting the handle rod and the rear conjunction member so as to be relatively rotatable may be disposed on the connection point of the handle rod and the rear conjunction member; the open/close locking mechanism may be equipped with a locking member (50) that is movable between a released position and a locked position along the handle rod, and a locking reception part (56) that is rotatable about the lower pin integrally with the rear conjunction member; when the locking member is moved to the locked position, the locking member and the locking reception part are engaged with each other so as to be relatively unrotatable about the lower pin so that the relative rotation of the handle rod and the rear conjunction member may become impossible; and when the locking member is moved to the released position, the locking member and the locking reception part are disengaged from each other so that the relative rotation of the handle rod and the rear conjunction member may become possible. According to this embodiment, since the locking member and the locking reception part can be engaged with each other in the vicinity of the lower pin connecting the handle rod and the rear conjunction member, loads applied to the locking member and the locking reception part can be reduced, whereby sizes and weights of these components can be reduced.

Further, when the stroller is in the unfolded state, the locking member and the locking reception part can be engaged with each other so as to be relatively unrotatable about the lower pin, and when the stroller is in the course of being in a state between the unfolded state and the folded state, the locking member and the locking reception part cannot be engaged with each other. In addition, also when the stroller is in the folded state, the locking member and the locking reception part can be engaged with each other so as to be relatively unrotatable about the lower pin. According to such structures, the open/close locking mechanism can be reliably operated in the unfolded state, so that the stroller can be restrained in the unfolded state. In addition, there is no possibility that the open/close locking mechanism is unintentionally operated during the deformation. In addition, the stroller can be restrained in the folded state.

In the above embodiment, the lower pin and the rear conjunction member may be both made of a metal, and the lower pin may be fitted with the respective handle rod and the rear conjunction member. According to such a structure, a load transmission path composed of the metal components is formed, which runs from the handle rod to the rear conjunction member through the lower pin. Thus, input of loads to the other components of the open/close locking mechanism, such as the locking member and the locking reception part, can be restrained, whereby these components can be made of a nonmetal material such as a resin. Further, the rear conjunction member and the rear leg may be rotatably connected to each other by a rear connection pin (39) made of a metal. According to such a structure, the load transmission path running from the handle rod to the rear leg through the rear conjunction rod can be composed of the metal components, whereby a strength and a rigidity of the stroller body can be maintained high.

In one embodiment of the present invention, the rear leg may be provided with a lower bracket (40) that receives a lower end of the handle rod from below when the stroller is in the unfolded state. According to such a structure, at least a part of a downward load applied to the handle rod is directly supported by the rear leg. Thus, a burden on a component to be placed on the connection portion of the handle rod, the front conjunction member and the rear conjunction member can be reduced.

Furthermore, a pair of meshing parts (59, 40b), which are engaged with each other in the right and left direction of the stroller body when the stroller is in the unfolded condition, may be disposed between the lower end of the handle rod and the lower bracket. According to such a structure, even when the handle rod and the rear leg are connected to each other through a plurality of components, a play between the handle rod and the rear leg in the right and left direction will not be enlarged, whereby an unsettled movement of the stroller body in the unfolded state can be more reliably prevented.

In one embodiment of the present invention, a grip part (43), which is gradually projecting ahead of the stroller body from an outside toward an inside in the right and left direction of the stroller body, may be disposed on an upper end side of the handle rod. In this case, a user can easily place his/her hand on the grip part, which improves an operability of the stroller can be enhanced.

In one embodiment of the present invention, a basket (5) may be hung down below the stroller body through a connection belt (120); the connection belt may be provided with a stopper part (120b) formed by folding and joining overlapped portions of the connection belt itself; a hook (121) having a slit (121a) through which the connection belt can pass is fixed on the basket; a loop may be formed by inserting the connection belt to the hook through the slit such that the connection belt is prevented from escaping from the hook by the the stopper part; and a constituent component (38, 39) of the stroller body may be passed through the loop so that the connection belt is latched on the stroller body. According to this embodiment, the stopper part is formed by folding the connection belt itself, the number of components required for installing the basket can be reduced.

In the above description, the reference numbers in the accompanying drawings are added to the respective components in parentheses, in order to facilitate understanding of the present invention. However, the present invention is not intended to be limited to the illustrated embodiment.

As described above, in the present invention, by bending the lower rod part with respect to the upper rod part such that the lower rod part is tilted behind the stroller body with respect to the extension line of the upper rod part, the stroller body can be constituted such that the upper rod part is inclined such that the extension line thereof is along the intermediate conjunction member and the front leg whereby an operation force can be linearly transmitted from the upper rod part to the front leg through the intermediate conjunction member, while the connection portion of the lower rod part, the front conjunction member and the rear conjunction member is located within a range of the stroller body behind the extension line of the upper rod part. Thus, a force for pushing the stroller body acts in the vicinity of the pivot axis line of the front wheel or ahead thereof, whereby the front wheel is turned about the pivot axis line as if the front wheel is drawn from the front. Thus, the front wheel can be prevented from swaying about the pivot axis line, whereby an orientation of the front wheel can be made stable both when the stroller moves forward and when the stroller turns. As a result, the operation feeling of the stroller can be improved as compared with the conventional one, while the folding function of the stroller is maintained.

The present invention is a wheel apparatus (12) of a hand push cart (1) including a stroller body (2) and an axle (25) mounted on the stroller body (2) through a wheel holding member (24), with a wheel (26) mounted on the axle so as to be rotatable about the axle. The wheel apparatus (12) includes a plurality of projecting parts (93) which are disposed on a side opposed to the wheel holding member of the wheel and are arranged around the axle with predetermined intervals therebetween, and a locking operation member (92) mounted on the wheel holding member so as to be swingable between a locking position and a locking released position about a swing axis (91) in parallel with the axle. A stopper part (92a) is provided at a position distant from the swing axis of the locking operation member. The stopper part (92a) is fitted in an interval (94) between the plurality of projecting parts when the locking operation member is located on the locking position so as to be engaged with the projecting parts in a circumferential direction of the axle. The stopper part (92a) is retracted from the projecting parts, when the locking operation member is located on the locking released position. An arc plotted by a central position (SC) of the stopper part, when it is engaged with the projecting parts, around the axle is referred to as a rotation trajectory (C1) of the projecting part. An arc plotted by the central position of the stopper part around the swing axis is referred to as a rotation trajectory (C2) of the stopper part. A relationship between the stopper part and the projecting parts is set such that, when tangent lines (α, β) with respect to the rotation trajectories are drawn on an intersection point (P) of the rotation trajectories, an intersection angle (θ) defined by the tangent lines is substantially 90°.

According to the present invention, when a torque is applied to the wheel when the stopper part is fitted in the interval between the projecting parts, a pushing force acts on between the projecting parts and the stopper part along a direction of the tangent line with respect to the rotation trajectory of the projecting part, regardless of a direction of the torque. Thus, there occurs no or little component force in a direction where the stopper part is pushed out of the interval between the projecting parts. As a result, regardless of the rotational direction of the wheel, the rotation of the wheel can be stably restrained.

In one embodiment of the present invention, each of the plurality of projecting parts may be provided with a base part (93a) extending in a radial direction of the wheel, and an enlarged part (93b) disposed on an outer circumferential side of the base part. Thus, escape of the stopper part can be prevented by the enlarged part of the projecting part.

Further, a narrowing taper may be provided on an outer circumferential side of the enlarged part. Thus, when the locking operation member is operated to the locking position, the stopper part can be easily received in the interval between the projecting parts.

In one embodiment of the present invention, the wheel may be mounted on the axle such that, in an area above the axle, an end surface (82e) of the wheel, which is opposed to the wheel holding member, is in contact with a restriction surface (81a) of the wheel holding member in a direction of the axle. In this case, each end surface of the plurality of projecting parts in the direction of the axle may be, as an end surface opposed to the wheel holding member, in contact with the restriction surface of the wheel holding member. By installing the wheel in this manner, in the area above the axle, a movement of the wheel to be inclined toward the wheel holding member can be prevented by the restriction surface. In addition, a bearing member (84) may be mounted on the axle so as to be rotatable with respect to the axle, and the wheel may be fitted with the bearing member so as to be relatively unrotatable. Thus, the bearing member and the wheel are slidable with each other, whereby no friction takes place between the wheel and the bearing member. Otherwise, the friction makes very slow progress. When a not negligible play is generated between the axle and the bearing member because of wear or deformation of the bearing member, the bearing member can be replaced with another one. Thus, generation and spread of an unsettled movement of the wheel with respect to the axle can be prevented.

The above embodiment is particularly suited for a case when only one wheel is provided on the axle. That is to say, in a case where only one wheel is provided on one axle, since a load on the wheel is larger as compared with a case where a plurality of wheels are provided on one axle, an inclination and an unsettled movement of the wheel are likely to occur. However, according to the above embodiment, such a disadvantage can be eliminated or restrained. The only one wheel may be mounted on the axle on a position outside the wheel holding member in the right and left direction of the stroller body. Thus, it is possible to restrain or prevent a phenomenon that the wheel disposed outside in the right and left direction of the stroller body is inclined inside because of an unsettled movement with respect to the axle.

In one embodiment of the present invention, the wheel apparatus may further include a wheel cap (100) that is attachable to and detachable from the wheel. In this case, the wheel cap is provided with a claw (103) to be engaged with the wheel. The claw may be located such that the claw is concealed by the wheel cap on a rear side thereof so as to be invisible from a user. The claw may be excluded from a surface treatment to be performed on the surface of the wheel cap. Thus, a disadvantage caused by the surface treatment, such as occurrence of faulty meshing caused by a dimensional change, increase in breaking risk caused by weakening or lowered resiliency and so on, can be prevented. When the surface treatment is performed by immersing the wheel cap into a treatment liquid such as a plating liquid, it is not necessary to immerse the claw into the treatment liquid. As a result, it is not necessary to mask the claw, which reduces the number of operation steps.

In the above description, the reference numbers in the accompanying drawings are added to the respective components in parentheses, in order to facilitate understanding of the present invention. However, the present invention is not intended to be limited to the illustrated embodiment.

As described above, in the present invention, the stopper part and the projecting parts are set in the specific positional relationship such that a pushing force acts on between the projecting parts and the stopper part along the direction of the tangent line with respect to the rotation trajectory of the projecting part. Thus, there occurs no or little component force in a direction where the stopper part is pushed out of the interval between the projecting parts. As a result, regardless of the rotational direction of the wheel, the rotation of the wheel can be stably restrained.

The stroller of the present invention includes a stroller body (2) and a seat (3) mounted on the stroller body, wherein: the seat is formed as a sub-assembly component formed by applying a seat material (61) with a tension applied thereto, to a seat part frame (62) of a structure in which a pair of right and left side pipes (62a) are connected to each other by a front pipe (62b), and a back part frame (63) of a structure in which a pair of right and left side pipes (64) are connected to each other by a head pipe (65), respectively; and the seat is installed on the stroller body by connecting, to the stroller body, the side pipes of the seat part frame of the seat formed as the sub-assembly component and the side pipes of the back part frame thereof.

In the stroller of the present invention, since the pair of right and left seat part frame are connected to each other by the front pipe, and the pair of right and left side pipes of the back part frame are connected to each other by the head pipe, a sufficient rigidity can be given to both of the seat part frame and the back part frame as single components. Thus, the tightly tensioned seat material is joined to the seat part frame and the back part frame, so that the seat can be formed as a rigid sub-assembly component capable of supporting a baby through the use of the "tension" of the seat material. By connecting the respective side pipes of the seat part frame and the back part frame to the stroller body, the seat can be installed on the stroller body. Thus, a core material can be omitted, which can reduce the number of components or make the seat assembling operation more efficient.

In one embodiment of the present invention, the stroller body may be provided on a rear surface side of the seat with a seat support member (70) extending in the right and left direction of the stroller body. In the vicinity of a boundary between the seat part frame and the back part frame, the seat material and the seat support member may be connected to each other through a connection belt (71). Thus, the seat material can be definitely divided into areas corresponding to a seat part and a back part, with the position of the connection belt as a boundary therebetween.

In addition, the seat material may be formed of a mesh fabric. Thus, a high breathability can be given to the seat material while it is being tightly tensioned.

In addition, the side pipe of the back part frame may be mounted on the stroller body through a holding member (53) that is rotatable about an axis line in the right and left direction of the stroller body, and means (73) for adjusting an inclination of the back part frame with respect to the stroller body may be provided between the seat and the stroller body. Thus, the inclination of the back part frame can be adjusted.

Further, handle rods (30) for transmitting an operation of a use to the stroller body may be disposed on both right and left sides of the stroller body, and the side pipes of the respective seat part frame and the back part frame may be connected to the handle rods. In general, since a part near the boundary between the seat part of the seat and the back part thereof is located inside lower end portions of the handle rods, the handle rods can be conveniently connected to the side pipes of the respective seat part frame and the back part frame, which is advantageous in making small and simple the connection structure between the side pipe and the stroller body.

In addition, between the right and left handle rods, there may be provided a hood (4) capable of being switched between an unfolded state in which the hood is opened to cover the seat from above, and a folded state in which the hood is folded in the rear part of the stroller body. The hood may be composed of: a hood base (113) having a mount part (113a) mounted on each of the right and left handle rods, a turning part (113c) rotatable with respect to the mount part about an axis line in the right and left direction of the stroller body, and a position holding means disposed between the mount part and the turning part, which selectively holds the turning part at any of a plurality of stop positions within its rotation range; a single hood stay (114) mounted on the turning parts to define an arch between the turning parts of the hood base; a screen (115) formed of a stretchable hood fabric and connected to the hood stay such that the screen wraps the hood stay inside a front end portion thereof; and a plurality of hood ribs (116) fixed on the screen, such that when the hood is in the unfolded state, the hood ribs are arranged at intervals therebetween in the back and forth direction of the stroller body, and that both end portions are put together in the vicinity of the turning parts of the hood base. By rotating the turning part of the hood base to rotate the hood stay forward, the hood is switched to the unfolded state. In the unfolded state, the hood stay is held on a position corresponding to the unfolded state by the position holding means of the hood base. A tension is applied to the screen so that the shape of the hood can be held. Thus, by using the single hood stay and the tension of the screen, the hood can be held in the unfolded shape. It is sufficient that the hood ribs are fixed on the screen so as to set up the screen in an arcuate shape, and it is not necessary to mount the hood ribs on the hood base such that the hood ribs are held on predetermined positions in the back and forth direction of the stroller body. It is not necessary to provide any additional component, such as a lever or a spring, in order to hold the interval between the hood stay and the hood rib and the interval between the hood ribs. Otherwise, only a few components are sufficient. Thus, the number of components can be reduced.

Further, there may be provided, on both sides of the screen, wrapping parts (117) capable of being wrapped around the handle rods so as to be joined to the handle rods. Thus, by connecting the handle rods and the screen, a tension can be generated on the screen between the wrapping parts and the hood stay, so that the hood shape holding effect can be enhanced. The wrapping part may be provided such that a position thereof corresponds to any of the plurality of hood ribs. Thus, since the hood ribs can be held along the handle rod, the hood shape holding effect can be more enhanced.

In addition, loop parts (115a) capable of being engaged with an outer circumference of the mount part or the turning part of the hood base may be provided on both sides of the screen where the end portions of the hood ribs are put together. By engaging the loop parts, the end of the hood rib can be held in substantially the vicinity of the mount part, i.e., in the vicinity of the turning center of the hood stay.

In the above description, the reference numbers in the accompanying drawings are added to the respective components in parentheses, in order to facilitate understanding of the present invention. However, the present invention is not intended to be limited to the illustrated embodiment.

As described above, in the present invention, the seat is formed as a rigid sub-assembly component capable of supporting a baby, by attaching the seat material being tensioned to the respective seat part frame and the back part frame. Then, the seat is installed on the stroller body by connecting the side pipes of the respective seat part frame and the back part frame to the stroller body. Thus, a core material can be omitted, which can reduce the number of components or make the seat assembling operation more efficient. In addition, even when the hood is provided, by holding the hood in the unfolded shape through the use of the single hood stay and the tension of the screen, the number of components required for adding the hood can be reduced.

The present invention is a stroller (1) including a stroller body (2) having a front leg (14) and a rear leg (15) on each side, and a handle rod (30) disposed on a rear part of the stroller body and configured to transmit an operation of a user to the stroller body, wherein a lower end of the handle rod is connected to the rear leg, and sectional shapes of the respective front leg and the rear leg have a direction in which a sectional size is larger and a direction in which a sectional size is smaller. The front leg is arranged such that a direction in which the sectional size is larger corresponds to the right and left direction of the stroller body, and the rear leg is arranged such that the direction in which the sectional size is smaller corresponds to the right and left direction of the stroller body.

In the stroller of the present invention, since the lower end of the handle rod, which is disposed on the rear part of the stroller body, is connected to the rear leg, the rear leg is located below the handle rod. Thus, a downward load transmitted through the handle rod is inputted more largely to the rear leg than to the front leg, so that the rear leg is subjected to relatively a larger bending moment along a vertical plane. Thus, by arranging the rear leg such that the direction in which the sectional size is smaller is oriented in the right and left direction of the stroller body, a larger section modulus and a larger section secondary moment are ensured in the loading direction, to thereby improve a flexural strength and a rigidity. On the other hand, since a load applied to the front leg is relatively smaller, the front leg is arranged such that the direction in which the sectional size is larger is oriented in the right and left direction of the stroller body. Thus, when the stroller is seen from the front, a larger projection area of the front leg is ensured. For this reason, when the stroller is seen from the front, the front leg is more noticeable to a user to improve a visual effect thereof. Accordingly, the bending strength and the rigidity can be ensured, and the visual effect given to a user can be simultaneously provided. By providing the front leg with a characteristic color or pattern, which is different from that of another part, or by using the front surface of the front leg as a surface displaying a trademark and/or a product name, the design and/or the trademark catches the attention of a user, and leaves a lasting impression on the user.

In one embodiment of the present invention, the hand rod and the rear leg may be located such that the lower end of the handle rod is received by the rear leg from below. In this case, since a downward load applied to the handle rod is inputted more largely to the rear leg, the effect of the present invention can be more efficiently provided.

In addition, the front surface of the front leg may be provided with an arched curve toward the front of the stroller body. This provides a further feature in design.

The stroller of the present invention may further include: an intermediate conjunction member (16) having one end portion thereof rotatably connected to upper end portions of the respective front leg and the rear leg, and the other end portion rotatably connected to the handle rod; a front conjunction member (35) having one end portion rotatably connected to the handle rod at a position (37) lower than a connection point (34) at which the handle rod is connected to the intermediate conjunction member, and the other end portion rotatably connected to the front leg at a position (38) lower than a connection point (29) at which the front leg is connected to the intermediate conjunction member; and a rear conjunction member (36) having one end portion rotatably connected to the handle rod at the position (37) lower than the connection point at which the handle rod is connected to the intermediate conjunction member, and the other end portion rotatably connected to the rear leg at a position lower than the connection point (29) at which the rear leg is connected to the intermediate conjunction member. The stroller may be foldable between the unfolded state and the folded state, by relatively rotating the front leg, the rear leg, the handle rod, the intermediate conjunction member, the front conjunction member, and the rear conjunction member, about their respective connection points. In such a foldable stroller, a downward load inputted from the handle rod is likely to be inputted more largely to the rear leg from the lower end of the handle rod. Thus, by setting the orientations of the front leg and the rear leg according to the present invention, the bending strength and the rigidity can be ensured, and the visual effect given to a user can be simultaneously provided.

In the above description, the reference numbers in the accompanying drawings are added to the respective components in parentheses, in order to facilitate understanding of the present invention. However, the present invention is not intended to be limited to the illustrated embodiment.

As described above, in the present invention, the front leg on each side is arranged such that the direction in which the sectional size is larger corresponds to the right and left direction of the stroller body, while the rear leg is arranged such that the direction in which the sectional size is smaller corresponds to the right and left direction of the stroller body. Thus, a visual effect when the stroller is seen from the front can be improved by the front leg, while the bending strength and the rigidity against a downward load is ensured by the rear leg. Thus, the bending strength and the rigidity can be ensured, and the visual effect given to a user can be simultaneously provided.

A stroller (1; 1A) of the present invention includes a stroller body (2) of a frame structure that is changeable between an unfolded state and a folded state, and armrests (16) disposed on both sides in the right and left direction of the stroller body, wherein: respective upper end portions of a front leg (14) and a rear leg (15) on each side are rotatably connected to a front end portion (16a) of the armrest; in the folded state, the armrest is inclined diagonally downward along the rear leg from the front end portion toward a rear end portion (16b) of the armrest; the armrest includes a top plate (16c) facing upward and side plates (16d, 16e) extended along both side peripheries of the top plate to be oriented in the right and left direction of the stroller body; an area surrounded by the top plate and the side plates is hollow; and the hollow has a shape opened toward a lower surface side. A distance from a centerline (CL1) of the rear leg with respect to the right and left direction of the stroller body up to the side plate (16d) located outside in the right and left direction is set greater than a distance from the centerline of the rear leg up to the inside side plate (16e) in the right and left direction.

According to the stroller of the present invention, when the stroller body is folded, since the armrest is inclined diagonally downward from the front end portion toward the rear end portion so that the lower surface side thereof come close to the rear leg that is inclined in the same direction, there is a possibility that the rear leg is partly received inside the armrest in the vicinity of the connection portion of the armrest and the rear leg. Even in this case, as compared with the inside side plate, the outside side plate is more distant from the centerline of the rear leg in the right and left direction of the stroller body, whereby a sufficient clearance remains between the outside side plate and the rear leg. Thus, it is possible to improve an effect of preventing that a finger is caught in the gap between the outside side plate of the armrest and the rear leg.

In one embodiment of the present invention, between the rear leg and the outside side plate of the armrest in the right and left direction, there is ensured a clearance (S2) of a size not less than a required clearance amount that is defined as a minimum value of a clearance amount required for preventing that a finger is caught. Thus, the effect of preventing that a finger is caught between the armrest and the rear leg can be reliably provided.

Further, between the rear leg and the top plate in the folded state, a clearance (S3) not less than the required clearance amount may be ensured. The inside side plate in the right and left direction may be provided with a concavity (16f) that leads the clearance between the rear leg and the top plate to outside the armrest. Thus, the effect of preventing that a finger is caught inside the armrest can be enhanced, without excessively bulging the inside of the armrest in the right and left direction of the stroller body.

In addition, in order to ensure a clearance (S1) not less than the required clearance amount between the upper end portions of the respective front leg and the rear leg, a connection position at which the front leg is connected to the armrest may be biased ahead of a connection position at which the rear leg is connected to the armrest. Thus, the effect of preventing that a finger is caught between the front leg and the rear leg can be enhanced.

In addition, the stroller body may be provided with a handle rod (30) that transmits an operation of a user to the stroller body. The rear end portion of the armrest may be rotatably connected to the handle rod. In the folded state, a clearance (S4) not less than the required clearance amount may be ensured between the rear end portion of the armrest and the handle rod. Thus, the effect of preventing that a finger is caught between the handle rod and the armrest can be enhanced.

In the above description, the reference numbers in the accompanying drawings are added to the respective components in parentheses, in order to facilitate understanding of the present invention. However, the present invention is not intended to be limited to the illustrated embodiment.

As described above, according to the present invention, as compared with the inside side plate of the armrest in the right and left direction of the stroller body, the outside side plate of the armrest is more distant from the centerline of the rear leg, whereby the sufficient clearance can be ensured between the outside side plate and the rear leg. Thus, during the folding of the stroller body, even when the armrest is inclined diagonally downward from the front end portion toward the rear end portion so that the lower surface side thereof comes close to the rear leg inclined in the same direction, or the rear leg is partly received inside the armrest in the vicinity of the connection portion of the armrest and the rear leg, the effect of preventing that a finger is caught between the outside side plate of the armrest and the rear leg can be enhanced.

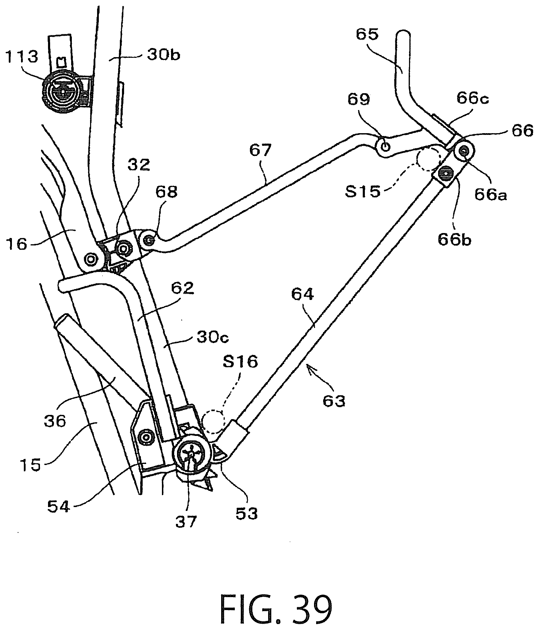

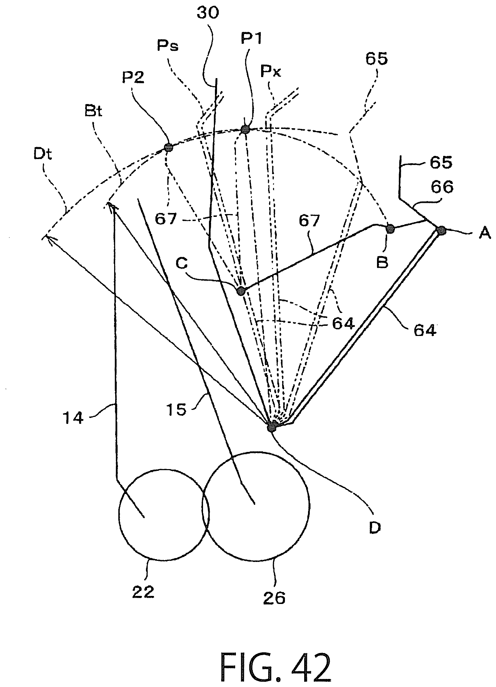

A stroller (1) of the present invention includes a stroller body (2) that is changeable between an unfolded state and a folded state, and a seat (3) disposed on the stroller body, and including a seat part (3a) and a back part (3b). The back part includes a back-part support member (64) having one end portion rotatably connected to the stroller body at a back-part connection point (37, D), and a head member (65) rotatably connected to the other end portion of the back support member at a head connection point (66a, A). The head member is connected to the stroller body through a conjunction member (67), one end portion of the conjunction member is rotatably connected to the stroller body at a front connection point (68, C) separated above the back-part connection point, the other end portion of the conjunction member is rotatably connected to the head member at a rear connection point (69, B) separated from the head connection point, so that the stroller body, the back-part support member, the head member, and the conjunction member constitute a four-bar rotation link mechanism. In the folded state, by rotating the back-part support member and the conjunction member about the back-part connection point and the front connecting point, the back part can be moved between a projecting position (position of Fig. 39) in which the back part is inclined rearward the stroller body, and a storage position (position Ps of Fig. 42) in which the back part is raised up forward the stroller body. When the back part is located in an area nearer the side of the storage position than a restriction position (position Px of Fig. 42) that is between the projecting position and the storage position, a connection structure (66) around any one (66a, A) of the head connection point and the rear connection point is constituted such that a rotational motion thereabout is restricted. The storage position (Ps) is set at a position where an action for holding the back part on the storage position is generated by a restoring force against a resilient deformation of the back part when the back part is moved to the area on the side of the storage position over the restriction position.

According to the stroller of the present invention, when the back part reaches the restriction point, the rotational motion about the connection point that is not on the stroller body, i.e., the connection point that is on the head member, is restricted. If the constituent components of the back part are completely rigid components, all the rotational motions about all the connection points should be allowed in order that the four-bar rotation link mechanism operates. That is to say, when a rotational motion about one connection point is restricted, the four-bar rotation link mechanism cannot operate. Thus, it is essentially impossible to rotate the back-support member of the back part and the conjunction member from the restriction position toward the storage position. However, actually, the constituent components of the back part are resiliently deformed, the back part can be moved toward the storage position over the restriction position. The resilient deformation amount of the back part increases or decreases depending on a correlation between the rotational motion of the back-part support member about the back-part connection point and the rotational motion of the conjunction member about the front connection point. When the back part moves over the restriction position, the resilient deformation amount increases firstly, and then decreases, and finally increases. After the resilient deformation amount has decreased, when the back part is returned to the projecting position, the resilient deformation amount increases. In accordance therewith, a restoring force acts on the back part to prevent the back part from returning to the projecting position. By using this nature, an action for holding the back part on the storage position can be generated by the restoring force against the resilient deformation of the back part. The action is obtained by an operation for moving the back part toward the storage position over the restriction position. Thus, the back part of the seat can be held on the storage position by a simple operation of moving the back part toward the storage position, without resort to any restraining component.

In one embodiment of the present invention, the storage position may be set such that the back part reaches the storage position, by moving the back part until an intersection point (P2) of rotation trajectories (Et, Bt) that are drawn by rotating the other (69, B) of the head connection point or the rear connection point when the back part is located on the restriction position about the back-part connection point and the front connection point, the intersection point (P2) being located ahead of the stroller body as compared with the other connection point at the restriction point, and the other connection point (B) conform to each other. In this embodiment, when the back part reaches the storage position, the other connection point reaches the intersection point of the two rotation trajectories, whereby the back part is released from the resiliently deformed state. When the back part is moved in any direction, since the resilient deformation amount increases, the back part is reliably held on the storage position at which neither the resilient deformation nor the restoring force thereagainst is generated.

In one embodiment of the present invention, the inclination of the back part can be changed in the unfolded state. A connection structure around the one connection point may be constituted such that, when the back part is raised up ahead of the stroller body over the movement region of the back part in the unfolded state, the back part reaches the restriction position. Thus, in the unfolded state, the four-bar rotation link mechanism of the back part can be rotated without being disturbed so as to change the inclination of the back part.

Further, in one embodiment of the present invention, as the back-part support member, side members (64) extending the side peripheries may be disposed on the right and left side peripheries of the back part, the head member may be disposed to connect the right and left side members, the conjunction members may be disposed to connect the head member and the stroller body on the right and left of the back part, whereby the four-bar rotation link mechanism may be constituted on each side periphery of the back part. Thus, since the rotational motions of the four-bar rotation link mechanisms on both sides of the back part can be restricted on the restriction positions, the operation for holding the back part on the storage position can be generated on both sides of the back part, whereby the back part can be more reliably held on the storage position.

In one embodiment of the present invention, during the movement of the back part between the projecting position and the storage position, there may be ensured, around the respective connection points, clearances (S8, S9, S15, S16) of a size not less than a required clearance amount that is defined as a minimum value of a clearance amount required for preventing that a finger is caught. Thus, it can be prevented that a user's finger is caught in the vicinity of the respective connection points when the back part is stored.

In the above description, the reference numbers in the accompanying drawings are added to the respective components in parentheses, in order to facilitate understanding of the present invention. However, the present invention is not intended to be limited to the illustrated embodiment.

As described above, according to the present invention, while the back part of the seat is moved from the restriction position toward the storage position, the rotational motion on the one connection point on the head member is restricted so that the back part is resiliently deformed, and there is generated the action for holding the back part on the storage position by the restoring force generated in accordance with the resilient deformation. Thus, the back part of the seat can be held on the storage position by a simple operation of moving the back part toward the storage position, without resort to any restraining component.

### BRIEF DESCRIPTION OF THE DRAWINGS

Fig. 1 is a perspective view of a stroller according to one embodiment of the present invention.
Fig. 2 is a right side view of the stroller of Fig. 1.
Fig. 3 is a perspective view showing a stroller body structure of the stroller of Fig. 1.
Fig. 4 is a right side view of the stroller body structure of Fig. 3.
Fig. 5 is a view showing a folded state of the stroller of Fig. 1.
Fig. 6 is a perspective view of an upper part of a hand push frame, seen from diagonally behind the stroller body.
Fig. 7 is a plan view mainly showing a grip rod.
Fig. 8 is a perspective view of a lower part of the stroller body, seen from diagonally behind.
Fig. 9 is a view showing a relationship between sectional shapes of a front leg and a rear leg, and a direction of the stroller body.
Fig. 10 is a view showing a connection portion of constituent components of the stroller body in enlargement, seen from a lateral side of the stroller body.
Fig. 11 is a perspective view of the connection portion Fig. 10, seen from diagonally behind the stroller body.
Fig. 12 is a side view showing a state in which a back part frame of a seat is raised up.
Fig. 13 is a perspective view showing a state in which the back part frame of the seat is raised up, seen from diagonally behind the stroller body.
Fig. 14 is a sectional view along a lower pin of an open/close locking mechanism.
Fig. 15 is a perspective view of the open/close locking mechanism, when seen from diagonally behind the stroller body.
Fig. 16 is a perspective view showing a locking member of the open/close locking mechanism and a locking reception part thereof, seen from inside the stroller body.
Fig. 17 is a view showing a seat part of the seat, seen from a front side.
Fig. 18 is a view showing the seat, seen from diagonally behind the stroller body.
Fig. 19 is a view showing a rear wheel and a structure therearound, seen from diagonally behind the stroller body.
Fig. 20 is a view showing the rear wheel and the structure therearound, seen from a direction of an arrow XX of Fig. 19.
Fig. 21 is a view showing a support structure of the rear wheel along an axle.
Fig. 22 is a view showing a main part of a rear-wheel locking mechanism.
Fig. 23 is a view showing a relationship between a stopper pin of the rear-wheel locking mechanism and projecting parts on a rear wheel side.
Fig. 24 is a perspective view of a front side of a wheel cap.
Fig. 25 is a perspective view of a rear side of the wheel cap.
Fig. 26 is a perspective view of a step and a part in the vicinity thereof.
Fig. 27 is a view showing a structure of a rear side of the step.
Fig 28 is an enlarged view of a hood and a part therearound.
Fig. 29 is an enlarged view of an attachment part of the hood to the hand push frame.
Fig. 30 is a view showing a connection belt for hanging a basket onto the stroller body.
Fig. 31 is a view showing a state in which the connection belt is set on a front connection pin.
Fig. 32 is a view showing in enlargement an armrest and a structure therearound in a folded state, seen from outside in a right and left direction of the stroller.
Fig. 33 is a front view of the part around the armrest, seen from a direction of an arrow XXXIII of Fig. 32.
Fig. 34 is a sectional view taken along a line XXXIV - XXXIV of Fig. 32.
Fig. 35 is a view showing the armrest and a structure therearound in the folded state , seen from a rear side of Fig. 32.
Fig. 36 is a perspective view of the part shown in Fig. 35, seen from diagonally ahead of the stroller.
Fig. 37 is a view of a part around the lower pin, seen from a direction of an arrow XXXVII of Fig. 5.
Fig. 38 is a perspective view of a part around the lower pin, seen from inside the stroller.
Fig. 39 is a view showing a state in which the back part frame is projected rearward in the folded state.
Fig. 40 is a view showing a state in which the back part frame is being stored to the handle rod side in the folded state.
Fig. 41 is a view showing a state in which the back part frame is stored in the handle rod side in the folded state.
Fig. 42 is a view schematically showing a motion of the back part frame in the folded state.
Fig. 43 is a view showing a stroller according to a modification example, correspondingly to Fig. 4.

### MODE FOR CARRYING OUT THE INVENTION

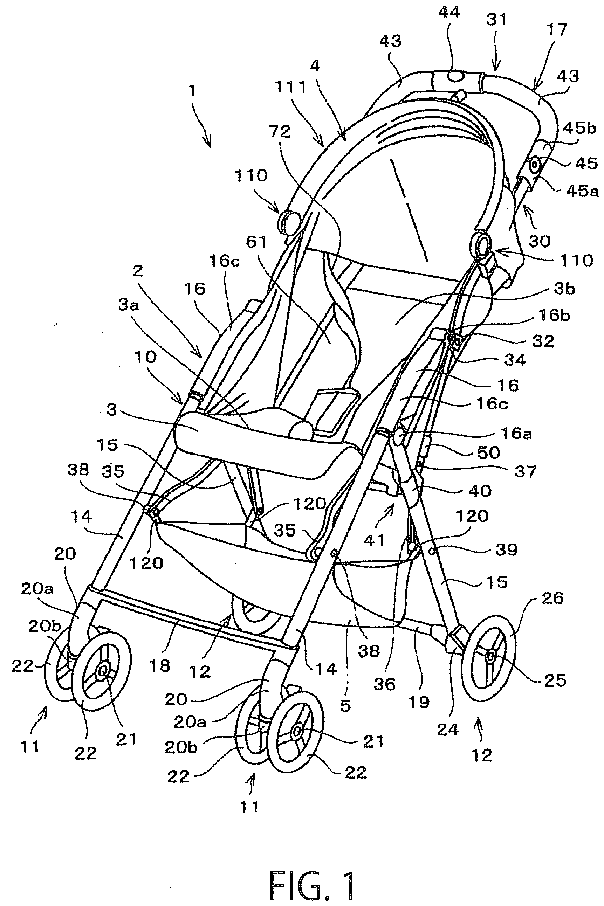

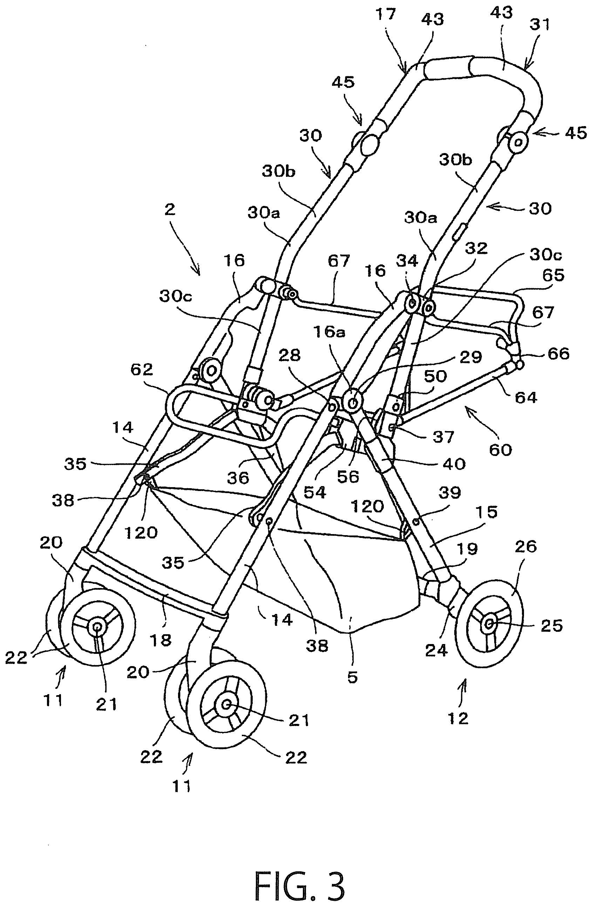

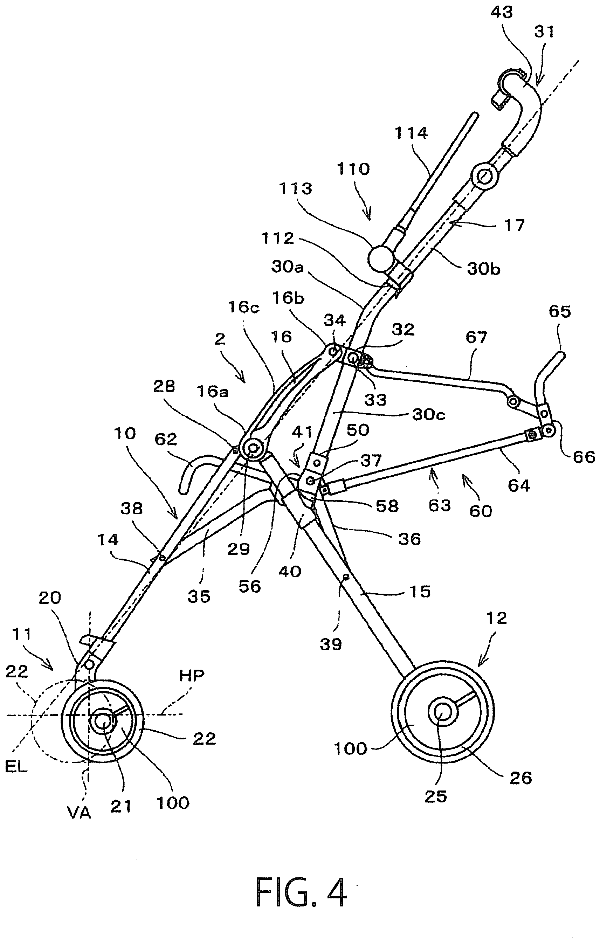

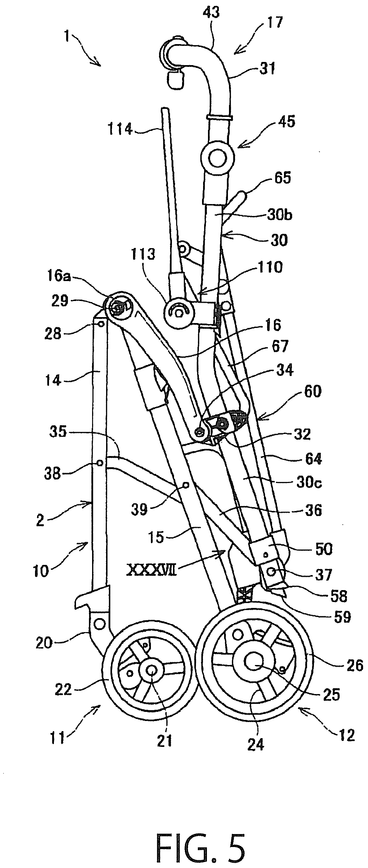

Herebelow, a stroller according to on embodiment of the present invention will be described. Firstly, an overall structure of the stroller is described with reference to Figs. 1 to 5. A stroller 1 includes a stroller body 2, a seat 3 supported by the stroller body 2, a hood 4 disposed above the seat 3, and a basket 5 disposed below the seat 3. In Figs. 3 to 5, a part or overall illustration of the hood 4 is omitted. In addition, as to the seat 3, only a frame part thereof is illustrated. In Figs. 4 and 5, illustration of the basket 5 is omitted. The stroller 1 is capable of being deformed between a state in which the stroller is unfolded (unfolded state), which is shown in Figs. 1 to 5, and a state in which the stroller is folded (folded state), which is shown in Fig. 5. Herebelow, the structure of the stroller 1 in the unfolded state is mainly described.

As is apparent from Figs. 3 and 4, the stroller body 2 includes a frame part 10, front wheel parts 11 and rear wheel parts 12. The front wheel parts 11 and the rear wheel parts 12 movably support the frame part 10. The frame part 10 is a part that constitutes a frame structure of the stroller body 2. The frame part 10 includes a pair of front legs 14 disposed on both sides of the stroller 1 (stroller body 2) in a right and left direction (width direction), a pair of rear legs 15 disposed on the both sides of the stroller 1 in the right and left direction, a pair of armrests (intermediate conjunction members) 16 disposed on the both sides of the stroller 1 in the right and left direction, a single hand push frame 17 disposed to connect the right and left armrests 16, a step 18 as a front lateral member connecting lower parts of the right and left front legs 14 to each other, and a rear lateral member 19 connecting lower parts of the right and left rear legs 16 to each other.

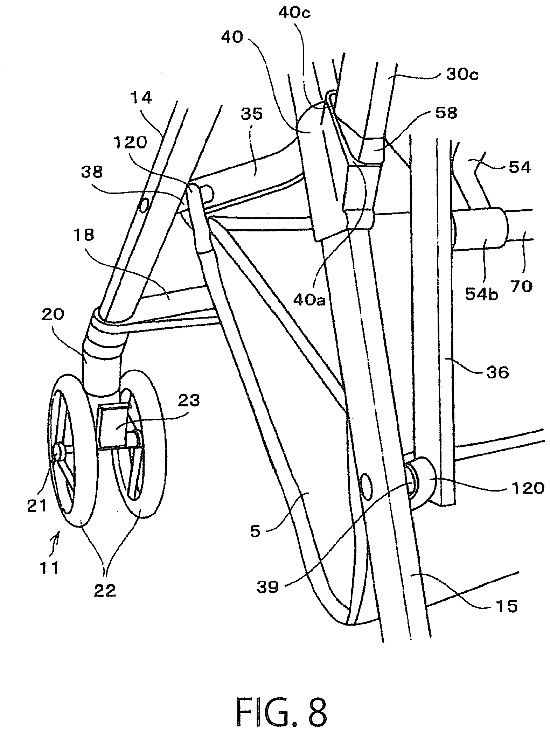

The front wheel part 11 is provided on a lower end of the front leg 14, and the rear wheel part 12 is provided on a lower end of the rear leg 15. Each front wheel part 11 has a front-wheel holding member 20 mounted on the lower end of the front leg 14, a horizontal axle 21 supported by the front-wheel holding member 20, and a pair of front wheels 22 located to sandwich the front-wheel holding member 20 therebetween, and rotatably mounted on both end portions of the axle 21. The front-wheel holding member 20 includes a fixed part 20a fixed on the front leg 14, and a turning part 20b that is turnable with respect to the fixed part 20a about a substantially vertical pivot axis line VA (see Fig. 4). The axle 21 is mounted on the turning part 20b. Thus, the front wheels 22 and their axles 21 are turnable about the pivot axis line VA. The axle 21 is offset with respect to the pivot axis line VA. When the stroller 1 is moved forward, the axle 21 is held behind the pivot axis line VA, by a moment applied to the front wheel 22 about the pivot axis line VA. The state is referred to as "forward movement position" of the front wheel 22. The front-wheel holding member 20 is provided with a turn locking mechanism (not shown) that restrains, by an operation of a locking lever 23 (see Fig. 8), the turning part 20b in an unturnable state, when the front wheel 22 is located on the forward movement position. A conventionally known one can be used as the turning locking mechanism, and detailed description thereof is omitted. On the other hand, the rear wheel part 12 includes a rear-wheel holding member 24 mounted on the lower end of the rear leg 15, an axle 25 that is supported by the rear-wheel holding member 24 such that the axle 25 is oriented in the right and left direction of the stroller body 2, and a single rear wheel 26 rotatably supported on the axle 25. The rear wheel 26 cannot be turned about a vertical axis line. Namely, the axle 25 of the rear wheel 26 is oriented all the time in the right and left direction of the stroller body 2. The rear wheel 25 and a structure therearound will be described in more detail later.

On one side in the right and left direction of the stroller body 2, upper end portions of the respective front leg 14 and the rear leg 15, and a leg attachment portion 16a on a lower end of the armrest 16, are rotatably connected to each other through a fulcrum pin 29. The same is true with the other side in the right and left direction of the stroller body 2. A joint position (rivet 28) at which the front leg 14 is joined to the leg attachment portion 16a is slightly offset with respect to the fulcrum pin 29 in a back and forth direction of the stroller body 2. The armrest 16 is a resin molded component, and has a top plate 16c facing upward on which a baby can rest his/her hand and/or arm. The armrest 16 has a specific shape for preventing that a finger is caught, which will be described below.

The hand push frame 17 includes a right and left handle rods 30 and a grip rod 31 extending to connect upper portions of the handle rods 30. Each handle rod 30 has a shape that can be divided into two sections, i.e., an upper rod part 30b and a lower rod part 30c, by a bent part 30a therebetween as a boundary. The upper rod part 30b and the lower rod part 30c are integrally formed with each other, by bending a single metal pipe member. As is apparent from Fig. 4, the lower rod part 30c is bent such that the lower rod part 30c is tilted behind the stroller body 2 from an extension line EL of the upper rod part 30b. An upper bracket 32 is unmovably mounted on the lower rod part 30c through a rivet 33. A handle connection part 16b on an upper end of the armrest 16 is mounted on the upper bracket 32 through an upper pin 34. Thus, the armrest 16 and the handle rod 30 of the hand push frame 17 are relatively rotatable with the upper pin 34 serving as a support point. A rear end part of a front conjunction rod (front conjunction member) 35 and a front end part of a rear conjunction rod (rear conjunction member) 36 are rotatably connected to a lower end of the lower rod part 30c through a lower pin 37. A structure of a connection portion of them will be described in more detail later. A front end part of the front conjunction rod 35 is rotatably connected to the front leg 14 through a front connection pin 38. A rear end part of the rear conjunction rod 36 is rotatably connected to the rear leg 15 through a rear connection pin 39. The conjunction rods 35, 36 and the connection pins 38, 39 are all made of metal. In addition, a lower bracket 40 is fixed on the rear leg 15. When the stroller 1 is in the unfolded state, the lower end of the handle rod 30 is in contact with the lower bracket 40 and is received by the rear leg 15 in an up and down direction. An open/close locking mechanism 41 for restraining the stroller 11 in the unfolded state and the folded state is provided around the lower pin 37. Details of the open/close locking mechanism 41 will be described later. The lower bracket 40 may be integrally formed with the rear leg 15.

The front legs 14, the rear legs 15, the armrests 16, the handle rods 30, the front conjunction rods 35 and the rear conjunction rods 36 respectively form link mechanisms on the right side and the left side of the frame part 10 of the stroller body 2. Structures of the right link mechanisms are the same as those of the left link mechanisms. By releasing the restriction of the stroller body 2 by the open/close locking mechanism 41 to rotate the constituent components of the link mechanisms about their connection points, the stroller 1 can change the state between the unfolded state of Fig. 1 and the folded state of Fig. 5. The change from the unfolded state to the folded state is described with reference to Fig. 4. Namely, when the stroller 1 is changed from the unfolded state to the folded state, the front leg 14 is rotated counterclockwise about the fulcrum pin 29 with resect to the armrest 16, the rear leg 15 is rotated clockwise about the fulcrum pin 29 with respect to the armrest 16, and the armrest 16 is rotated clockwise about the upper pin 34 with respect to the lower rod part 30c. In accordance therewith, the front conjunction rod 35 and the rear conjunction rod 36 are rotated about the lower pin 37 with respect to the lower rod part 30c, so that the front conjunction rod 35 is rotated about the front connection pin 38 with respect to the front leg 14 and that the rear conjunction rod 36 is rotated about the rear connection pin 39 with resect to the rear leg 15. Thus, the frame part 10 of the stroller body 2 is folded, as shown in Fig. 5. In the folded state, the front wheel 22 and the rear wheel 26 are arranged with a certain space therebetween in the back and forth direction. At this time, the center of gravity of the stroller 1 is located between the front wheel 22 and the rear wheel 26 in the back and forth direction of the stroller body 2. Thus, the stroller 1 in the folded state can stand by itself by means of the front wheel 22 and the rear wheel 26. Since the position of the rivet 28 for joining the front leg 14 is located ahead of the fulcrum pin 29, there is defined a clearance between the front leg 14 and the rear leg 15 in the folded state. Thus, there is no possibility that something wrong takes place, for example, a finger is caught therebetween. This will be described in more detail later.

When the stroller 1 in the unfolded state is seen from the right and left direction of the stroller body 2, the upper rod part 30b of the hand push frame 17, the armrest 16 and the front leg 14 are arranged linearly. One judgment reference for judging whether they are linear or not linear is as follows. When the extension line EL of the upper rod part 30b passes through at least a part of the armrest 16 and at least a part of the front leg 14, they can be judged as linear. In addition, when the front wheel is located on the forward movement position (position depicted by solid line in Fig. 4), the upper rod part 30b is preferably located such that the extension line EL intersects with an imaginary horizontal plane HP including the axle 21, at the axle 21 or ahead thereof. More preferably, the upper rod part 30b is located such that the extension line EL intersects with the imaginary horizontal plane HP at the pivot axis line VA or ahead thereof. Since the upper bracket 32 is mounted on the lower rod part 30c, the position of the upper pin 34 can be close to the extension line EL.

When the relationship among the upper rod part 30b, the armrest 16, the front leg 14 and the front wheel 22 is set as described above, the following advantage can be obtained. Namely, how a force is applied to a lower part of the stroller 1, i.e., an area in the vicinity of a ground surface on which the front wheel 22 and the rear wheel 26 are positioned, is examined. In this case, a force of a user for pushing the stroller body 2 through the handle rod 30 acts on an area in the vicinity of the pivot axis line VA of the front wheel 22 or an area ahead thereof. Thus, the front wheel 22 is turned about the pivot axis line VA as if the front wheel 22 is drawn from the front. Therefore, the front wheel 22 can be prevented from swaying about the pivot axis line VA, whereby an orientation of the front wheel 22 can be made stable both when the stroller moves forward and when the stroller turns. As a result, the operation feeling of the stroller 1 can be improved. On the other hand, in the conventional stroller in which the extension line of the handle rod is set to run between the front wheel and the rear wheel or a part in the vicinity of the rear wheel, the front wheel is pushed from behind. Thus, the front wheel is likely to sway about the pivot axis line, whereby the orientation of the front wheel is unstable, which may impair the operation feeling of a user.

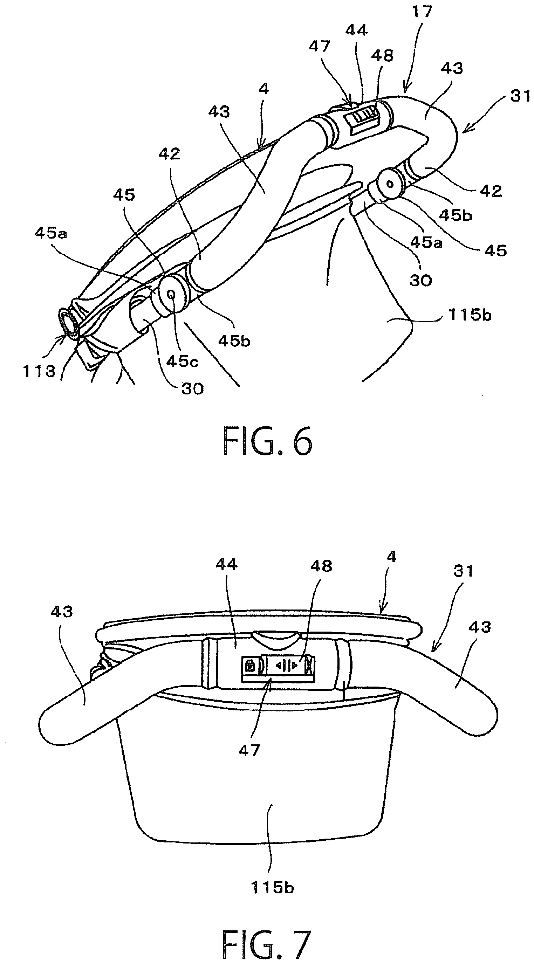

As shown in Figs. 6 and 7 in more detail, the grip rod 31 of the hand push frame 17 includes connection parts 42 connected to the right and left handle rods 30, grip parts 43 that are bent to extend diagonally frontward and upward of the stroller body 2 with respect to the connection parts 42, and a coupling part 44 positioned between the grip parts 43. The connection parts 42 and the grip parts 43 are integrally formed with each other, by bending a metal pipe member. The connection part 42 and the handle rod 30 is connected to each other through a connector 45. Thus, even when the handle rod 30 and the grip rod 31 differ from each other in sectional shape, the handle rod 30 and the grip rod 31 can be reliably joined to each other, by conforming shapes of a handle fitting part 45a of the connector 45 and a grip fitting part 45b thereof to the sectional shapes of the respective handle rod 30 and the grip rod 31.

Each connector 45 incorporates an angle adjusting mechanism. The angle adjusting mechanism is provided for switching the grip fitting part 45b of the connector 45 between a rotatable state and an unrotatable state with respect to the handle fitting part 45a, so that an inclination of the grip rod 31 with respect to the handle rod 30 can be varied. When push buttons 45c (see Fig. 6) of the right and left connectors 45 are simultaneously pushed, the restriction between the fitting parts 45a and 45b of each connector 45 is released, so that the inclination of the grip rod 31 with respect to the handle rod 30 can be varied. When the pushed state of the push button 45c is released, the relative rotation between the fitting parts 45a and 45b of the connector 45 becomes impossible. Herebelow, a state in which the connection part 42 and the upper rod part 30b of the handle rod 30 are arranged substantially linearly, in other words, a state in which the connection part 42 is located on the extension line EL of the upper rod part 30b, is referred to as "reference position" of the grip rod 31. Since the grip part 43 is extended diagonally, as described above, when the grip rod 31 is located on the reference position, the grip part 43 is gradually projecting ahead of the stroller body 2, from an outside of the grip part 43 (side to be connected to the handle rod 30) to an inside thereof. Thus, a user can easily place his/her hand on the grip part 43, whereby the operability of the stroller 1 can be improved. An operation by one hand is easy. When the grip rod 31 is inclined rearward from the reference position, the grip part 43 gradually projects upward from the outside toward the inside. Also in this case, a user can easily grip the grip part 43, whereby the operability of the stroller 1 can be improved.

The coupling part 44 is made of resin, and has generally a hollow cylindrical shape. Both ends of the coupling part 44 are fitted with the grip parts 43 so as to be integral with the grip parts 43. The coupling part 44 is equipped with an open/close operation part 47 for operating the open/close locking mechanism 41 of the stroller body 2. The open/close operation part 47 includes an operation lever 48 disposed on an outer circumference of the coupling part 44, and a connection wire (not shown) accommodated inside the grip rods 31 so as to be cooperative with the operation lever 48. The connection wire runs up to the lower end of the handle rod 30 through the grip rod 31. The operation lever 48 is installed on the coupling part 44 so as to be slidable in the right and left direction. When the operation lever 48 is located on the right side of Fig. 6, the restriction function of the open/close locking mechanism 41 works to restrain the stroller 1 in the unfolded state or in the folded state. When the operation lever 48 is operated leftward, the restriction by the open/close locking mechanism 41 is released. As apparent from Fig. 5, when the stroller 1 is folded in a state where the grip rod 31 is located on the reference position, the grip parts 43 and the coupling part 44 of the grip rod 31 are located generally between the front wheel 22 and the rear wheel 26, in the back and forth direction of the stroller body 2. Such a positioning is advantageous in that the center of gravity position of the stroller 1 in the folded state is set between the front wheel 22 and the rear wheel 26.

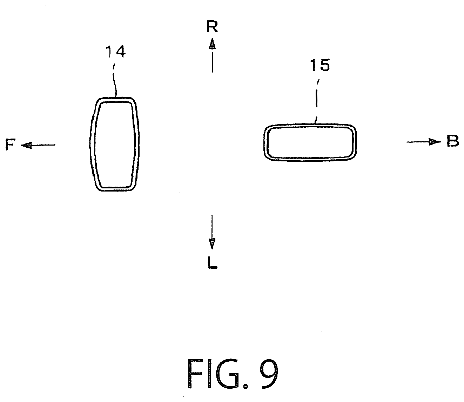

Fig. 8 is a view of the front leg 14 and the rear leg 15, seen from diagonally behind, and Fig. 9 is a view showing a relationship between sectional shapes of the front leg 14 and the rear leg 15, and a direction of the stroller body 2. Similarly to the handle rod 30 and so on of the hand push frame 17, the front leg 14 and the rear leg 15 are formed by processing a metal pipe member. As apparent from Fig. 9, the front leg 14 has a section of a deformed hexagonal shape, and the rear leg 15 has a section of a substantially rectangular shape. In Fig. 9, the front side of the stroller body 2 is indicated by the arrow F, the rear side thereof is indicated by the arrow B, the left side thereof is indicated by the arrow L, and the right side thereof is indicted by the arrow R. Although the front leg 14 and the rear leg 15 differ from each other in sectional shape. However, as to a sectional size, the front leg 14 and the rear leg 15 commonly have a longer edge direction of a wide width and a shorter edge direction of a narrow width. On the other hand, the front leg 14 and the rear leg 15 differ from each other in a relationship between the direction of the stroller body 2 and the longer edge direction or the shorter edge direction of the section. The front leg 14 is arranged such that the longer edge direction thereof corresponds to the right and left direction of the stroller body 2, and that the shorter edge direction thereof corresponds to the back and forth direction of the stroller body 2. On the other hand, the rear leg 15 is arranged such that the longer edge direction thereof corresponds to the back and forth direction of the stroller body 2, and that the shorter edge direction thereof corresponds to the right and left direction of the stroller body 2. The reason is as follows.

The rear leg 15 is located below the hand push frame 17. The hand push frame 17 is connected to the rear leg 15 through the rear conjunction rod 36. The lower end of the hand push frame 17 is supported by the lower bracket 40 on the rear leg 15. Thus, when a user applies a downward load on the hand push frame 17, the load is more largely inputted to the rear leg 15 than to the front leg 14, so that the rear leg 15 is subjected to relatively a larger bending moment along a vertical plane. Thus, by arranging the rear leg 15 such that the longer edge direction thereof corresponds to the back and forth direction of the stroller body 2, a larger section modulus and a larger section secondary moment are ensured in the loading direction, to thereby improve a flexural strength and a rigidity. On the other hand, since a load applied to the front leg 14 is relatively smaller, the front leg 14 is arranged such that the longer edge direction thereof corresponds to the right and left direction of the stroller body 2. Thus, a larger projection area of the front leg 14 is ensured, when the stroller 1 is seen from the front. For this reason, when the stroller 1 is seen from the front, the front leg 14 is more noticeable to a user to improve a visual effect thereof. The top plate 16c of the armrest 16 and the front leg 14 seem to be integral with each other, whereby an eye catch effect can be further enhanced. By providing the front leg 14 with a characteristic color or pattern, which is different from that of another part, or by using the front surface of the front leg 14 as a surface displaying a trademark and/or a product name, the design and/or the trademark catches the attention of a user, and leaves a lasting impression on the user. In addition, by providing the front surface of the front leg 14 with an arched curve toward the front of the stroller body 2, a further feature in design is provided. The sectional shapes of the respective front leg 14 and the rear leg 15 are taken by way of example, and the shapes may be suitably modified. For example, the front leg 14 and the rear leg 15 may be formed of a pipe member having an elliptic section. Also in this case, the front leg 14 is arranged such that a direction in which a sectional size is larger corresponds to the right and left direction of the stroller body 2, and the rear leg 15 is arranged such that a direction in which a sectional size is smaller corresponds to the right and left direction of the stroller body 2.

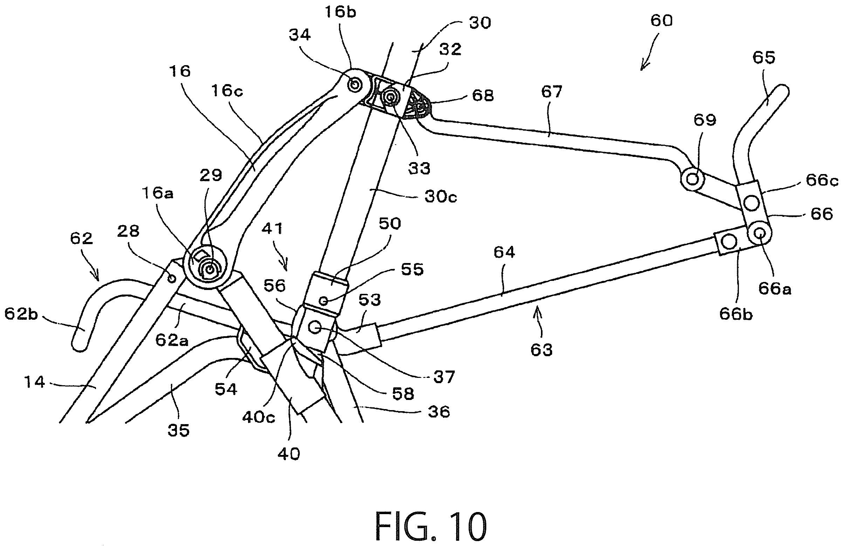

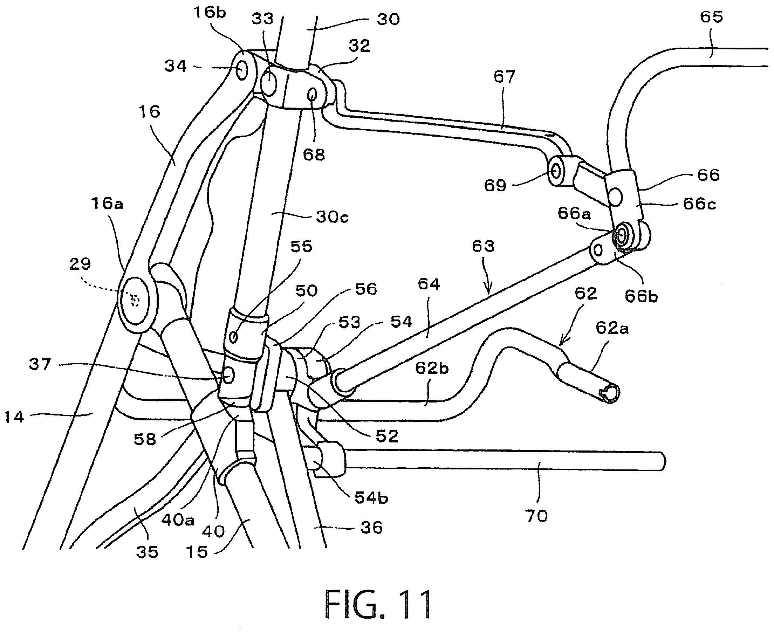

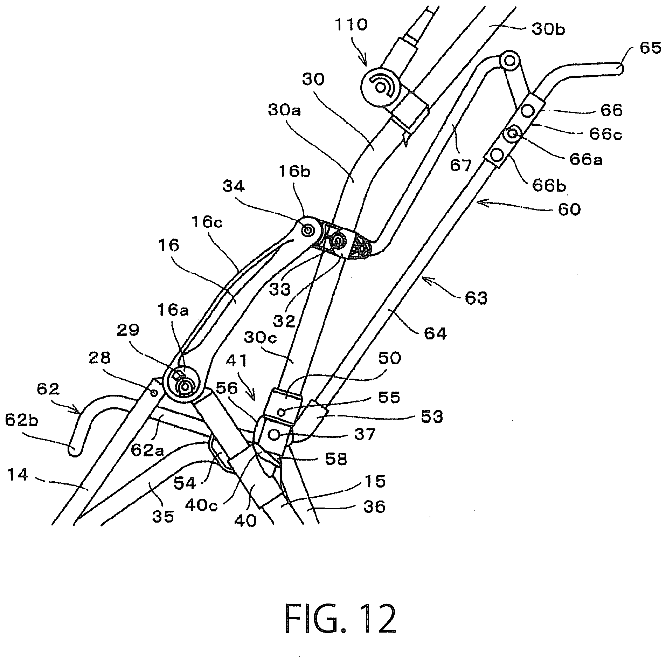

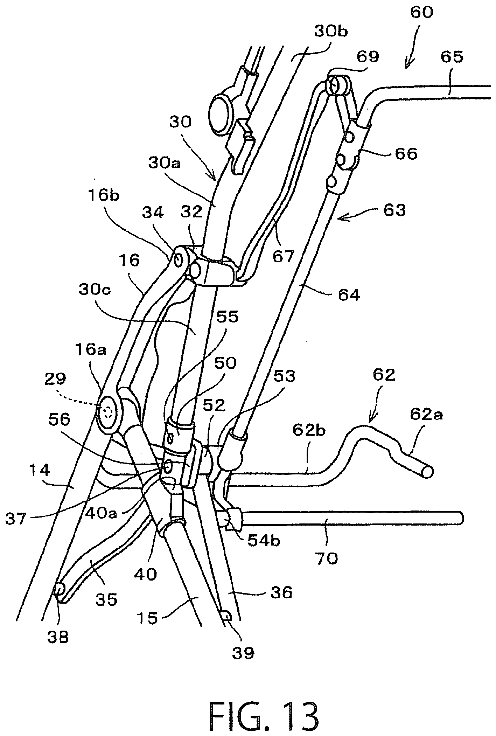

Next, details of the open/close locking mechanism 41 is described. Fig. 10 is an enlarged view of a connection portion at which the front leg 14, the rear leg 15, and the hand push frame 17 are connected, and Fig. 11 is a view of the connection portion, seen from diagonally behind the stroller body 2. Figs. 12 and 13 show a state in which the seat 3 is raised up from the state shown in Figs. 10 and 11. A structure related to an inclination adjustment of the seat 3 will be described later. As described above, the open/close locking mechanism 41 is disposed around the lower pin 37. A pair of the open/close locking mechanisms 41 are provided on the right side and the left side of the stroller body 2. The right and left open/close locking mechanism 41 have the same structure.

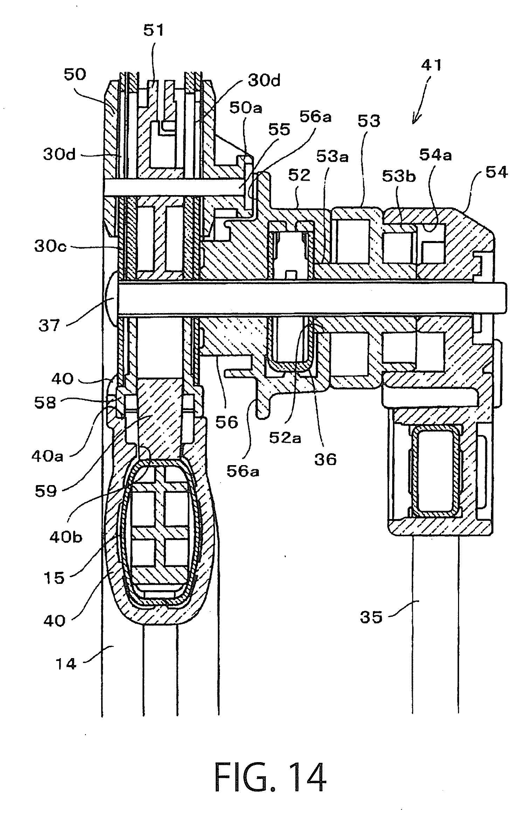

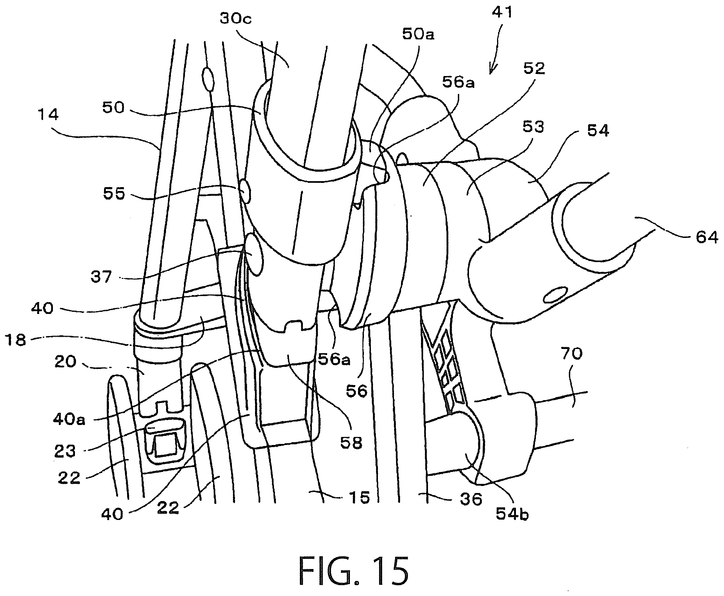

Fig. 14 is a sectional view of the open/close locking mechanism 41, taken along the lower pin 37, and Fig. 15 is a view showing a part around the open/close locking mechanism 41, seen from diagonally behind the stroller body 2. As apparent from these drawings, the open/close locking mechanism 41 includes a locking member 50 fitted on an outer circumference of the lower rod part 30c of the handle rod 30, a wire holder 51 disposed in the lower rod part 30c, a first holding member 52, a second holding member 53 and a third holding member 54. The first to third holding member 52 to 54 are located inside the stroller body 2 with respect to the lower rod part 30c in the right and left direction (right side in Fig. 14). The lower rod part 30c is provided with an elongate hole 30d along a longitudinal direction thereof. The locking member 50 and the wire holder 51 are connected to each other by a connection pin 55 extending through the elongate hole 30d, such that the locking member 50 and the wire holder 51 can be integrally moved along the longitudinal direction of the lower rod part 30c. The first to third holding members 52, 53 and 54 are combined with each other so as to be relatively rotatable, and are connected to the lower rod part 30c, with the lower pin 37 passing through the first to third holding members 52, 53 and 54. The holding members 52, 53 and 54 are independently rotatable about the lower pin 37. The first holding member 52 and the third holding member 54 are equipped with fitting recesses 52a and 54a which are coaxial with the lower pin 37. The second holding member 53 is equipped with fitting projections 53a and 53b which can be rotatably fitted in the fitting recesses 52a and 54a. Since the fitting recesses 52a and 54a and the fitting projections 53a and 53b are fitted with each other, an unsettled movement between the first to third holding members 52, 53 and 54 can be restrained, and the first to third holding members 52, 53 and 54 can be smoothly, relatively rotated to each other about the lower pin 37.

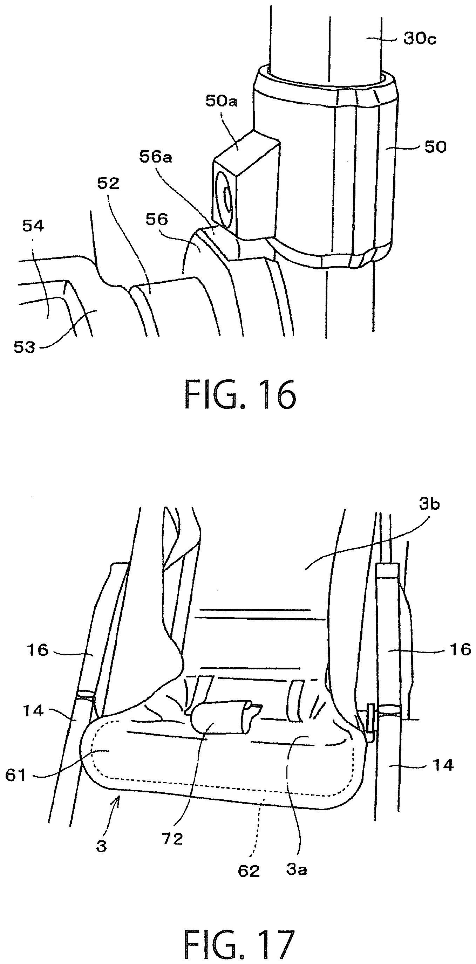

The rear conjunction rod 36 is fixed on the first holding member 52, and the front conjunction rod 35 is fixed on the third holding member 54. The lower pin 37 passes through the rear conjunction rod 36. Further, a frame of the seat 3 is fixed on the second holding member 53 and the third holding member 54, which will be described in detail later. A locking reception part 56 is integrally formed with the first holding member 52. The locking reception part 56 projects to an outer circumference of the first holding member 52. The locking reception part 56 has two locking reception grooves 56a that are formed in the outer circumference thereof. The locking member 50 is provided with a locking protrusion 50a protruding inside the lower rod part 30c. The locking member 50 is moved between a released position at which the locking protrusion 50a is apart above the locking reception part 56, which is shown in Fig. 16, and a locked position at which the locking protrusion 50a is displaced from below the released position. When the locking member 50 is moved to the locked position, the locking protrusion 50a is fitted in the locking reception groove 56a. Thus, the locking member 50 and the locking reception part 56 are engaged with each other about the lower pin 37 such that the locking member 50 and the locking reception part 56 cannot be relatively rotated with each other.

The locking member 50 is mounted on the lower rod part 30c of the handle rod 30, and the locking reception part 56 is provided so as to be rotatable together with the rear conjunction rod 36 about the lower pin 37. Thus, when the locking member 50 and the locking reception part 56 becomes relatively unrotatable with each other, the relative rotation of the handle rod 30 and the rear conjunction rod 36 about the lower pin 37 becomes impossible. During changing the state the stroller body 2 between the unfolded state and the folded state, the rear conjunction rod 36 is relatively rotated with respect to the handle rod 30, the rear leg 15 and so on. Thus, when the handle rod 30 and the rear conjunction rod 36 becomes relatively unrotatable with each other, the deformation of the stroller body 2 becomes also impossible. As a result, the stroller 1 is retrained in the unfolded state or in the folded state. As described above, the locking reception part 56 has the two locking reception grooves 56a. In the unfolded state, the locking protrusion 50a is fitted in the one locking reception groove 56a. In the folded state, the locking protrusion 50a is fitted in the other locking reception groove 56a. During changing the state between the unfolded state and the folded state, it is impossible that the locking protrusion 50a and the locking reception grooves 56a are engaged with each other.

In this manner, in the open/close locking mechanism 41, since the locking protrusion 50a of the locking member 50 is fitted in the locking reception groove 56a that is located on a position relatively near to the lower pin 37 about which the handle rod 30 and the rear conjunction rod 36 are rotated, the stroller 1 is restrained in the unfolded state or in the folded state. Since the locking member 50 and the locking reception part 56 are engaged with each other in the vicinity of the rotation center, a load applied to the fitting portion between the locking protrusion 50a and the locking reception groove 56a can be restrained to be small. Thus, the sizes and the weights of the locking member 50 and the locking reception part 56 can be decreased. Switching of the locking member 50 between the released position and the locked position is realized by the operation of the operation lever 48 (see Figs. 6 and 7) disposed on the coupling part 44 of the grip rod 31. As has been already described, the operation lever 48 is connected to the connection wire running through the hand push frame 17, and a distal end portion of the connection wire is connected to the wire holder 51. The wire holder 51 is urged toward the locked position by an urging member such as a spring (not shown). By operating the operation lever 48 leftward in Fig. 7 against the force of the urging member, the wire holder 51 is pulled upward so that the locking member 50 is moved toward the released position.

As shown in Fig. 14, a support leg 58 and a fitting block 59 fixed inside the support leg 58 are disposed on the lower end portion of the lower rod part 30c of the handle rod 30 (also see Fig. 5). The fitting block 59 projects below the handle rod 30 through the support leg 58. When the stroller 1 is unfolded from the folded state to the unfolded state, the support leg 58 is fitted in a leg reception part 40a of the lower bracket 40, and the fitting block 59 is fitted in a recess 40b formed in the leg reception part 40a. Since the support leg 58 comes into contact with the leg reception part 40a of the lower bracket 40, the handle rod 30 is received by the lower bracket 40 from below. Thus, a part of a downward load applied to the handle rod 30 can be directly supported by the rear leg 15, whereby a burden on the constituent components of the open/close locking mechanism 41 can be reduced.

In addition, since the fitting block 59 is fitted in the recess 40b, a right and left displacement of the handle rod 30 with respect to the rear leg 15 can be limited. Thus, even when the handle rod 30 and the rear leg 15 are connected to each other through the plurality of components such as the lower pin 37, the rear conjunction rod 36 and the rear connection pin 39, a play between the handle rod 30 and the rear leg 15 will not be enlarged, whereby the unsettled movement of the stroller body 2 in the unfolded state can be more reliably prevented. Namely, the fitting block 59 and the recess 40b of the lower bracket 40 function as a pair of meshing parts. However, a projection similar to the fitting block 59 may be provided on the lower bracket 40, and a recess may be formed in the lower end of the handle rod 30, such that the projection and the recess can function as a pair of meshing parts. In order to prevent that a finger is caught when the support leg 58 is fitted into the reception part 40a during changing the state from the folded state to the unfolded state, the lower bracket 40 is equipped with a longitudinal wall part 40c that surrounds a circumference of the support leg 58 from the front, the right and the left of the stroller body 2 (see also Figs. 8 and 10).

A material of the locking member 50, the first to third holding members 52, 53 and 54, the support leg 58 and the fitting block 59 may be suitably set. When these components are formed of a resin as a raw material, the weight of the stroller body 2 can be reduced. Since the metal handle rod 30 and the metal rear conjunction rod 36 are fitted with the metal lower pin 37, a load transmission path from the handle rod 30 up to the rear conjunction rod 36 is composed of the metal components as a whole. Further, since the rear conjunction rod 36 is connected to the rear leg 15 through the metal rear connection pin 39, a load transmission path between the rear conjunction rod 36 and the rear leg 15 is similarly composed of the metal components as a whole. Thus, even when the constituent components such as the first to third holding member 52, 53 and 54 of the open/close locking mechanism 41 are made of resin, since the load transmission path from the handle rod 30 up to the rear leg 15 through the rear conjunction rod 36 is composed of the metal components, the strength and the rigidity of the stroller body 2 can be maintained to be high.

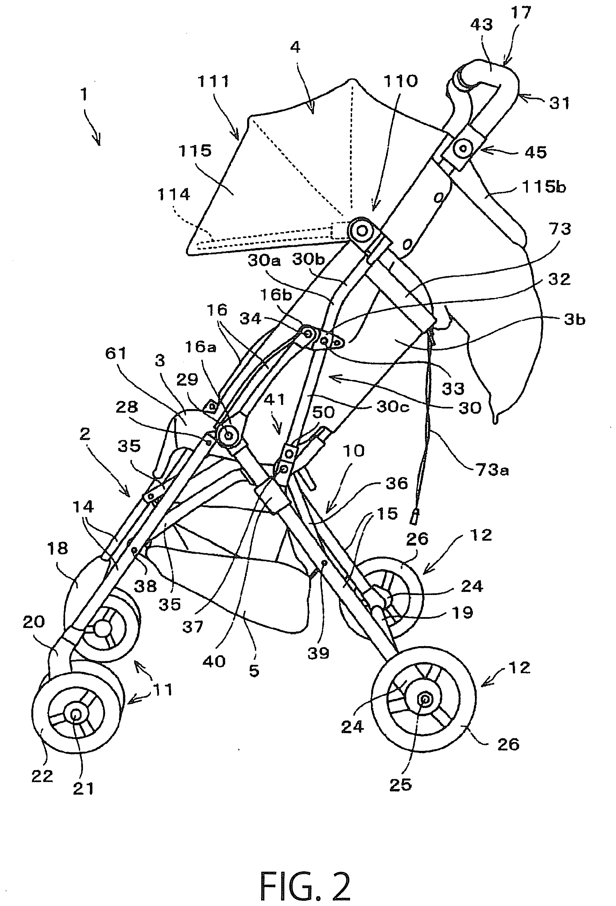

Next, a structure of the seat 3 is described. The seat 3 has a basic structure formed by applying a seat material 61 shown in Figs. 1 and 2 to a seat frame 60 shown in Figs. 3 and 4. As apparent from Figs. 10 an 11, the seat frame 60 includes a seat part frame 62 and a back part frame 63. The seat part frame 62 is a part serving as a skeleton of the seat part of the seat 3, and the back part frame 63 is a part serving as a skeleton of the back part of the seat 3. The seat part frame 62 is formed by bending a single pipe member to have an integral structure including a pair of right and left side pipes 62a and a front pipe 62b connecting front ends of the side pipes 62a. The front pipe 62b is bent downward with respect to the side pipes 62a and is extended in the right and left direction of the stroller body 2. A rear end of each side pipe 62a is fixed on the third holding member 54 of the open/close locking mechanism 41 (see Fig. 15). Thus, the seat part frame 62 is rotated integrally with the front conjunction rod 35 about the lower pin 37 between the unfolded state and the folded state.

On the other hand, the back part frame 63 includes a pair of right and left side pipes (side members as back support members) 64 and a head pipe (head member) 65 connecting the side pipes 64 to extend in the right and left direction of the stroller body 2. Each side pipe 64 is fixed on the second holding member 53 of the open/close locking mechanism 41 (see Fig. 15). Thus, the side pipe 64 is connected to the handle rod 30 so as to be rotatable about the lower pin 37. The head pipe 65 is connected to the side pipe 64 through a joint 66. The joint 66 has a pair of connection parts 66b and 66c that are combined with each other so as to be rotatable about a connection pin 66a. The side pipe 64 is fixed on the lower connection part 66b, and the head pipe 65 is fixed on the upper connection part 66c. Thus, the head pipe 65 can vary its angle (inclination) with respect to the side pipes 64 about the connection, pin 66a. Further, the upper connection part 66c is connected to the upper bracket 32 through a conjunction rod (conjunction member) 67. A front end portion of the conjunction rod 67 is rotatably connected to the upper bracket 32 through a front pin 68, and a rear end portion of the conjunction rod 67 is rotatably connected to the upper connection part 66c through a rear pin 69. The lower connection part 66b of the joint 66 functions as a part of the side pipe 64, and the upper connection part 66c of the joint 66 functions as a part of the head pipe 65. Thus, the handle rods 30, the side pipes 64, the head pipe 65 and the conjunction rods 67 constitute a four-bar rotation link mechanism.

As shown in Figs. 10 and 11, when the side pipe 64 of the back part frame 63 is inclined rearward about the lower pin 37, the head pipe 65 is raised up by the conjunction rod 67 with respect to the side pipe 64 so as to be rotated about the connection pin 66a. On the other hand, as shown in Figs. 12 and 13, when the side pipe 64 of the back part frame 63 is raised up about the lower pin 37 toward the handle rod 30, the head pipe 65 is pushed by the conjunction rod 67 so as to be rotated clockwise in Fig. 12 about the connection pin 66a. Thus, the connection parts 66b and 66c of the joint 66 are linearly arranged, and the head pipe 65 varies its inclination such that a distal end of the head pipe 65 is warped rearward with respect to an extension line of the side pipe 64. The clockwise rotational motion of the upper connection part 66c of the joint 66 with respect to the lower connection part 66b of the joint 66 is restricted at a position slightly displaced clockwise from the position shown in Fig. 12, and a further clockwise rotation over the restricted position is impossible. The restriction of the rotational motion can be realized by providing, between the lower connection part 66b and the upper connection part 66c, a stopper or the like for limiting the rotation range, for example.

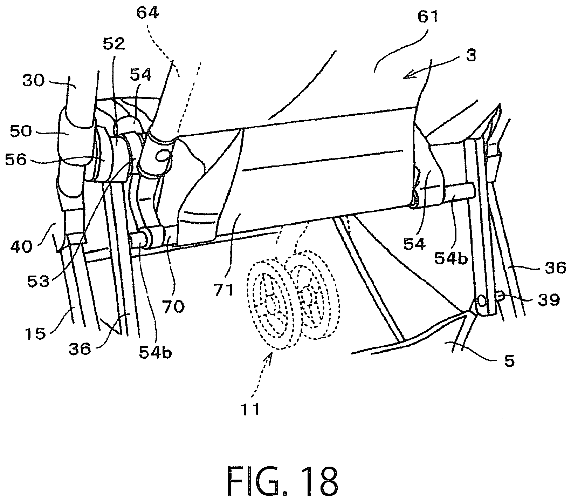

The seat material 61 is joined to the pipes 62a, 62b, 64 and 65 of the seat frame 60, with a suitable tension being applied to the seat material 61. Figs. 17 and 18 show a state in which the seat material 61 is installed. A mesh fabric having a plurality of vent holes is utilized as the seat material 61, for example. As apparent from Figs. 13 and 15, a pipe holding part 54b is integrally formed with the third holding member 54 of each of the right and left open/close locking mechanism 41. An end portion of a seat support pipe (seat support member) 70 extending in the right and left direction of the stroller body 2 is mounted on the pipe holding part 54b. The seat support pipe 70 is rotated integrally with the side pipe 64 of the back part frame 63 about the lower pin 37. The pipe holding part 54b are in contact with the rear conjunction rod 37 from inside in the right and left direction. Thus, the rigidity of the stroller body 2 in the right and left direction can be improved.

As apparent from Fig. 18, a connection belt 71 is provided to form a loop on a rear side of the seat material 61 at a position in the vicinity of a boundary between the seat part frame 62 and the back part frame 63. By passing the seat support pipe 70 through the connection belt 71, the connection belt 71 is engaged with the seat support pipe 70 with a suitable tension being applied thereto. Thus, the seat material 61 is definitely divided into areas corresponding to a seat part 3a and a back part 3b (Fig. 17), with the position of the connection belt 71 as a boundary therebetween. The seat material 61 is also equipped with a seat belt 72 for holding a baby.

According to the above seat 3, by applying the seat material 61 to the seat frame 60 and mounting thereon the associated components such as the seat belt 72 and so on, the seat 3 itself can be completed beforehand as a sub-assembly component. The seat 3 assembled as the sub-assembly component can be installed on the stroller body 2, by fixing the side pipe 62a of the seat part frame 62 on the third holding member 54 of the open/close locking mechanism 41, by fixing the side pipe 64 of the back part frame 63 on the second holding member 53 of the open/close locking mechanism 41, by passing the seat support pipe 70 through the loop of the connection belt 71, and by connecting the joint 66 and the upper bracket 32 through the conjunction rod 67. Namely, since the operation for assembling the seat 3 and the operation for installing the seat 3 onto the stroller body 2 can be definitely separated from each other, an assembling operation efficiency related to the seat can be enhanced.

In order to ensure the stability of the back part 3b by connecting the back part 3b of the seat 3 to the handle rod 30, and to enable an inclination adjustment of the back part 3b, disposed on a rear side of the seat 3 is an inclination adjustment belt 73 serving as means for adjusting the inclination of the back part frame 63 (see Fig. 2). The inclination adjustment belt 73 is located to surround an outside of the back part 3b of the seat 3 in the light and left direction of the stroller body 2. Both ends of the inclination adjustment belt 73 are fixed on the handle rods 30 of the hand push frame 17. A length of the inclination adjustment belt 73 can be adjusted by using an adjustment string 73a. By extending the inclination adjustment belt 73, the back part 3b is laid down. Meanwhile, by contacting the inclination adjustment belt 73, the back part 3b is raised up.

In this manner, the reclining function of the seat 3 is achieved. Note that the means for adjusting the inclination of the back part frame 63 is not limited to the inclination adjustment belt 73, and may be suitably modified. For example, other connection members whose lengths can be independently adjusted may be disposed between the both sides of the back part frame 63 and the right and left handle rods 30.

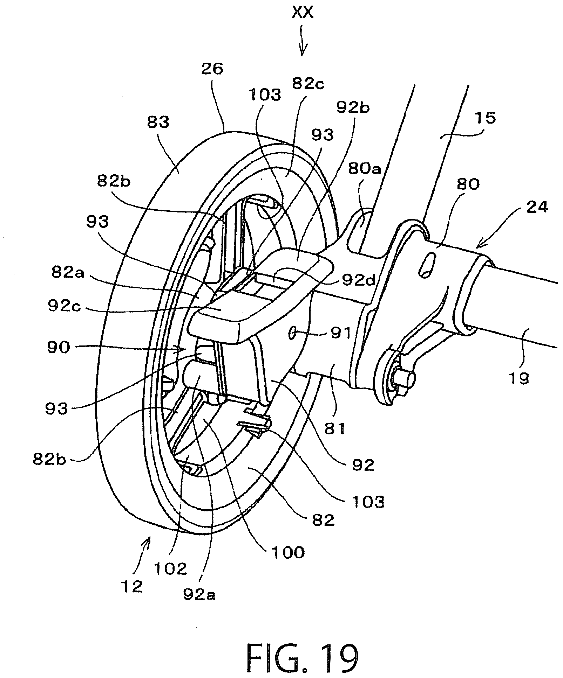

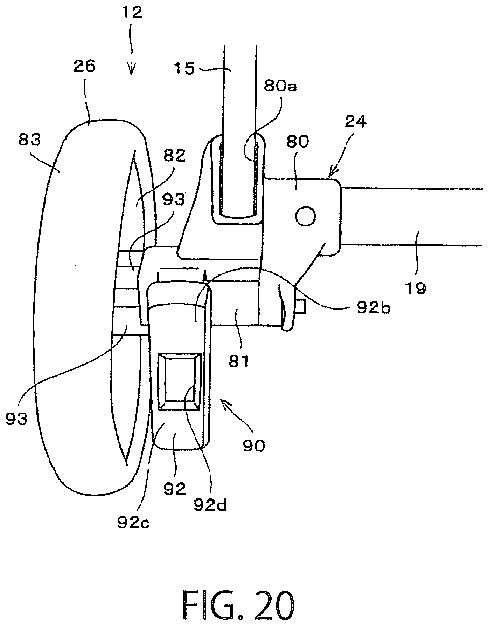

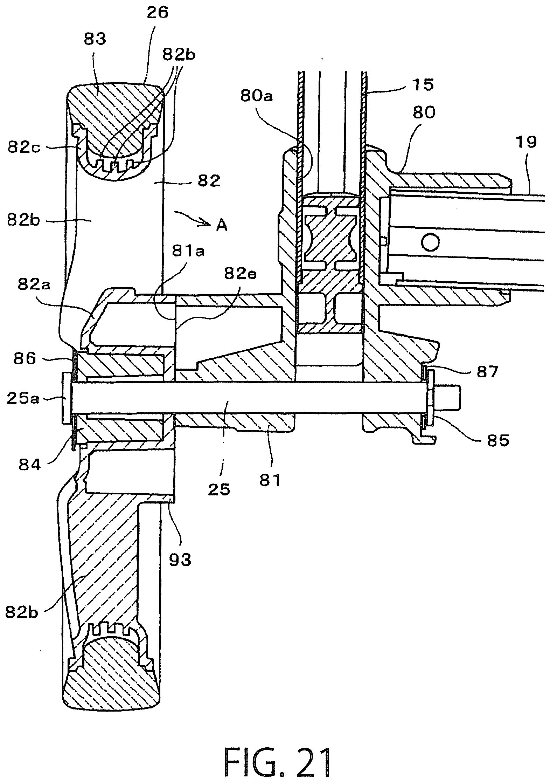

Next, the rear wheel 26 and a structure therearound are described in detail. As shown in Figs. 19 and 20, a rear-leg attachment part 80 and an axle support part 81 are integrally formed with the rear-wheel holding member 24. The rear-leg attachment part 80 has a fitting recess 80a. By fitting a lower end of the rear leg 15 in the fitting recess 80a, the rear leg 15 and the rear-wheel holding member 24 are integrally connected to each other. A rear lateral member 19 is fixed on the rear-leg attachment part 80. As shown in Fig. 21, the axle 25 of the rear wheel part 12 is mounted on the axle support part 81. The rear wheel 26 includes a wheel body 82 made of a resin, and a tire 83 made of a resilient material, which is fitted on an outer circumference of the wheel body 82. The wheel body 82 has a hub 82a, spokes 82b and a rim 82c. The number of the spokes 82b is set as three in order to reduce a weight (see Fig. 1). The rim 82c is equipped with a plurality of ribs 82d for reinforcement. Similarly to the rear wheel 26, each front wheel 22 has a stricture formed by combining the wheel body and the tire. The number of the spokes of the wheel body is three.

The hub 82a is fitted on the axle 25 through a collar 84 as a bearing member.

The collar 84 and the hub 82a are fitted with each other so at to be integrally rotatable. The collar 84 is relatively rotatable with respect to the axle 25. Thus, even when the axle 25 is made of a metal and the wheel body 82 is made of a resin, the collar 84 and the axle 25 are slidable with each other, whereby no friction takes place between the hub 82a and the collar 84. Otherwise, the friction makes very slow progress. When a not negligible play is generated between the axle 25 and the collar 84 because of wear or deformation of the collar 84, the collar 84 can be replaced with another one. Thus, generation and spread of an unsettled movement of the rear wheel 26 with respect to the axle 25 can be prevented. The axle 25 is mounted on the axle support part 81 such that a flange part 25a on one end thereof is located outside the rear wheel 26. The other end side of the axle 25 projects inward the axle support part 81 so as to be stopped by a fixing member 85 such as a stop ring. A washer 86 is disposed between the flange part 25a of the axle 25 and the collar 84. Owing to the washer 86, an inclination of the rear wheel 26 with respect to the axle 25 is restrained. Another washer 87 is disposed between the fixing member 85 and the axle support part 81. Owing to the washer 87, wear of an end surface of the axle support part 81, which is opposed to the fixing member 85, can be prevented, and an axial unsettled movement of the axle 25 can be avoided. Thus, the stability of the axle 25 is improved, which further enhances the inclination prevention effect of the rear wheel 26 with respect to the axle 25. Note that, when an effect equivalent to the above effect can be expected by the fixing member 85, the washer 87 may be omitted. Further, the rear wheel 26 is mounted on the axle 25 such that, in an area above the axle 25, an inside end surface 82e of the hub 82a is in contact with a restriction surface 81a of the axle support part 81. Thus, even in a structure where only the one rear wheel 26 is disposed on the one rear wheel part 12, an inward slanting of the upper part of the rear wheel 26 in the direction of the axle, i.e., an inclination of the rear wheel 26 in a direction indicated by the arrow A in Fig. 21 can be prevented.

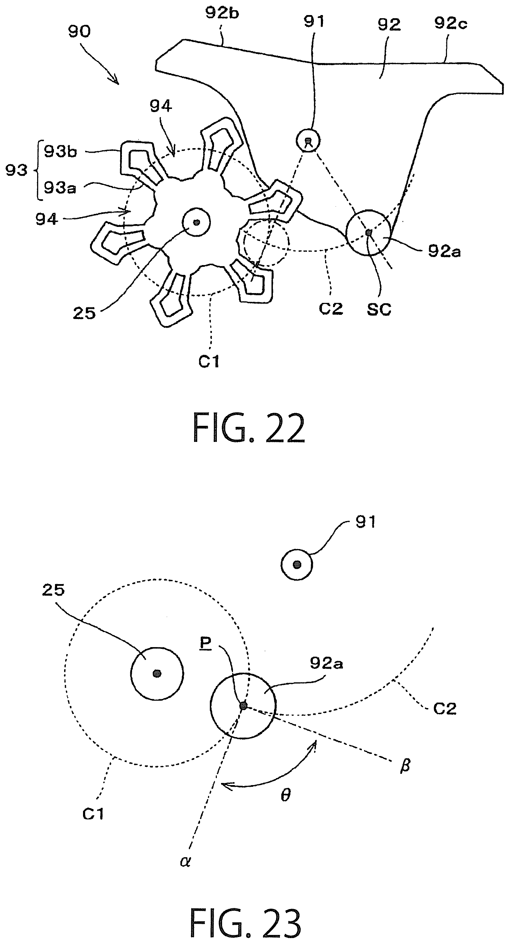

As shown in Figs. 19 and 20, between the rear wheel 26 and the rear-wheel holding member 24, a rear-wheel locking mechanism 90 for unrotatably restricting the rear wheel 26 is further provided. The rear-wheel locking mechanism 90 includes an operation pedal (locking operation member) 92 mounted on the rear-wheel holding member 24 so as to be rotatable about a pin 91 as a pivot axis, and a plurality of projecting parts 93 disposed inside the hub 82a of the rear wheel 26. The projecting parts 93 are formed integrally with the wheel body 82 to constitute a part of the hub 82a. The aforementioned end surface 82e of the hub 82a is formed by end surfaces of these projecting parts 93. As shown in Fig. 22, the plurality of projecting parts 93 are arranged around the axle 25 at constant pitches. Fig. 22 shows a relationship between the operation pedal 92 and the projecting parts 93, seen from a direction in parallel with the axle 25. The right side of Fig. 22 corresponds to the rear side of the stroller body 2.

Each projecting part 93 includes a base part 93a extending in a radial direction of the hub 82a, and an enlarged part 93b located on an outer circumferential side of the base part 93a. On the other hand, the operation pedal 92 is provided with a cylindrical stopper pin (stopper part) 92a. A pair of operation parts 92b and 92c are disposed on a surface of the operation pedal 92. When a user selectively treads on the operation part 92b or 92c, the operation pedal 92 is swung about a pin 91 like a see-saw. When the operation part 92b on the left side in Fig. 22 is treaded on, the operation pedal 92 is rotated counterclockwise about the pin 91 to move to a locking released position shown by the solid line, so that the stopper pin 92a moves away behind the projecting parts 93. Meanwhile, when the right operation part 92c is treaded on, the operation pedal 92 is rotated clockwise about the pin 91 to move to a locked position, so that the stopper pin 92a is fitted in a pin reception groove 94 that is defined as a space between the projecting parts 93. In this case, even when a user tries to rotate the rear wheel 26 in any of the forward direction and the rearward direction, since the projecting parts 93 and the stopper pin 92 are engaged with each other in a circumferential direction of the axle 25 so that the hub 82a is circumferentially restricted, the rear wheel 26 cannot be rotated. Due to the provision of the enlarged part 93b on the outer circumferential side of the projecting part 93, escape of the stopper pin 92a, which is caused by a torque acting on the rear wheel 26, can be prevented. The escape prevention effect of the stopper pin 92a can be more reliably obtained, by setting the following relationship between the stopper pin 92a and the projecting part 93.

As shown in Fig. 23, an arc plotted by a central position SC of the stopper pin 92a around the axle 25 is referred to as "rotation trajectory C1 of the projecting part 93". An arc plotted by the central position SC of the stopper pin 92a around the pin 91 as a pivot axis is referred to as "rotation trajectory C2 of the stopper pin 92a". The relationship between the stopper pin 92a and the projecting part 93 is set such that, when tangent lines α and β with respect to the rotation trajectories C1 and C2 are drawn on an intersection point P of the rotation trajectories C1 and C2, an intersection angle θ defined by the tangent lines α and β is substantially 90°. Owing to this structure, even when a torque acts on the rear wheel 26 in any of the forward direction and the rearward direction while the stopper pin 92a is fitted in the pin reception groove 94, a pushing force acts on between the projecting part 93 and the stopper pin 92a along the tangent line α. Thus, there occurs no or little component of force in a direction where the stopper pin 92a is pushed out of the pin reception groove 94. Therefore, the restriction effect of the rear wheel 26 by the rear-wheel locking mechanism 90 can be reliably obtained. As long as a component of force, which is sufficient for pushing the stopper pin 92a out of the pin reception groove 94, is not generated, the intersection angle θ of 90° may have a more or less allowable range. The expression "substantially 90°" is intended to mean that such a range is included.

The enlarged part 93b, which is disposed on the projecting part 93 of the hub 82a, has a narrowing taper on an outer circumferential side thereof. Due to the provision of the taper, the stopper pin 92a can be easily received by the pin reception groove 94. In addition, a loophole 92d is formed between the operation parts 92b and 92c of the operation pedal 92. The rear-wheel holding member 24 has at least one of a locking sign, which appears in the loophole 92d when the operation pedal 92 is located on the locked position, and a locking release sign, which appears in the loophole 92d when the operation pedal 92 is located on the locking released position. By confirming the signs, a user can know whether the rear wheel 26 is in the locked state or in the rotatable state.

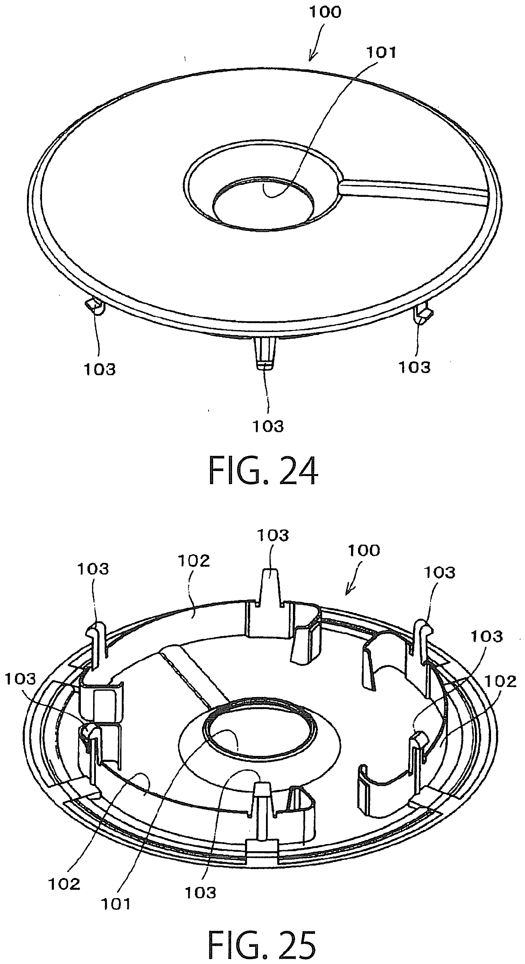

Figs. 24 and 25 show a wheel cap 100. The wheel cap 100 is a resin component optionally mounted as an ornament on outside the respective front wheel 22 (limited to the outside front wheel) and the rear wheel 26. Figs. 14 and 19 show a state in which the wheel cap 100 is mounted. The wheel cap 100 for front wheel and the wheel cap 100 for rear wheel have the same structure, other than a size. Thus, the structure of the wheel cap 100 is described herebelow, by taking the wheel cap 100 for the rear wheel 26 as an example. The wheel cap 100 has a discoid appearance. A through-hole 101 is formed in a central portion of the wheel cap 100. A rear side (side shown in Fig. 25) of the wheel cap 100 is equipped with a rib 102 to be fitted in the rim 82c of the rear wheel 26 along an inner circumference thereof, and a plurality of claws 103 further projecting from the rib 102. By engaging the claws 103 with the inside of the rim 82c, the wheel cap 100 is mounted on the rear wheel 26. When the wheel cap 100 is mounted on the rear wheel 26, the claws 103 are concealed by the wheel cap 100 on the rear side thereof so as to be invisible from a user. Thus, when a surface of the wheel cap 100 is subjected to a surface treatment for improving a functionality, such as a plating treatment for improving an appearance, a coating treatment for improving an abrasive resistance, the claws 103 can be excluded from the surface to be treated. Therefore, a disadvantage caused by the surface treatment, such as occurrence of faulty meshing caused by a dimensional change, increase in breaking risk caused by weakening or lowered resiliency and so on, can be prevented. When the surface treatment is performed by immersing the wheel cap 100 into a treatment liquid such as a plating liquid, it is not necessary to immerse the claws 103 into the treatment liquid. As a result, it is not necessary to mask the claws 103, which reduces the number of operation steps.

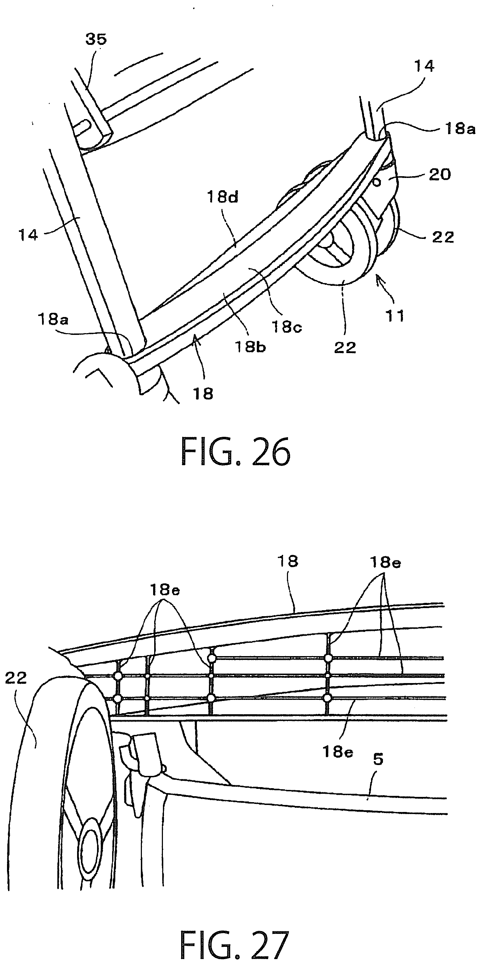

Fig. 26 shows a step 18. The step 18 is provided for a footrest on which a baby who is seated on the seat 3 can rest his/her feet. The step 18 also functions as a member that connects the right and left front legs 14 to reinforce the stroller body 2 in the right and left direction. The step 18 is a resin component. In both ends of the step 18, there are formed leg fitting holes 18a through which the front legs 14 can pass. A step surface 18b on which feet can be placed is formed between the leg fitting holes 18a. The step surface 18b is a stepped surface including a front part 18c and a rear part 18d that is stepped down from the front part 18c. Such a stepped surface can reduce a width of the step 18 in appearance in the back and forth direction of the stroller body 2. Fig. 27 shows a structure of a rear surface side of the step 18. In order to give a required strength to the step 18, ribs 18e are formed longitudinally and laterally on the rear surface side of the step 18. It is not necessary to uniformly provide the ribs 18e. The ribs 18e may be provided only on a location where a strength or a rigidity should be increased.

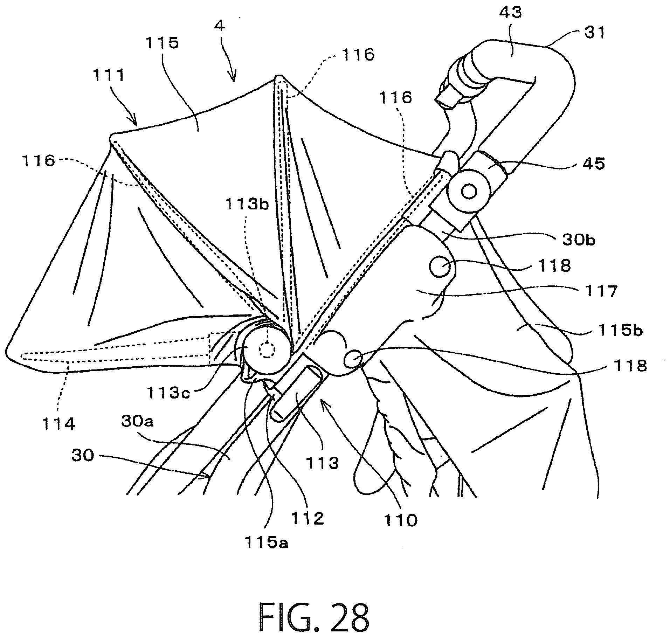

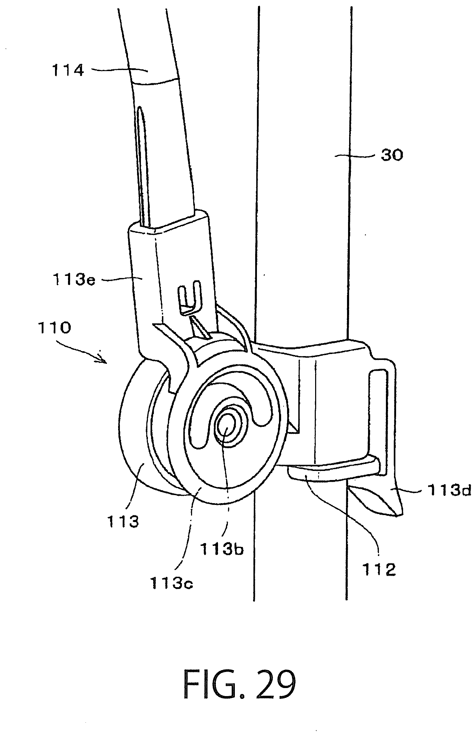

Fig. 28 is an enlarged view of the hood 4 and a part therearound, and Fig. 29 is an enlarged view of a part where the hood 4 is mounted on the hand push frame 17. The hood 4 includes a hood support mechanism 110 and a hood body 111. As apparent from Fig. 29, the hood support mechanism 110 includes a pair of hood brackets 112 (only one of them is shown in Fig. 29) mounted on the right and left handle rods 30 of the hand push frame 17, a pair of hood bases 113 detachably mounted on the hood brackets 112, and a single hood stay 114 disposed between the hood bases 113 (see also Fig. 4). Each hood base 113 includes a mount part 113a mounted on the hood bracket 112, and a turning part 113c mounted on the mount part 113a so as to be rotatable about a pin 113b. By pushing an operation lever 113d, the mount part 113a can be detached from the hood bracket 112.

The mount part 113a and the turning part 113c are made of a resin. Between the mount part 113a and the turning part 113c, there is provided a position holding means (not shown) which selectively holds the turning part 113c at any one of a plurality of stop positions within a rotation range of the turning part 113c by means of a resiliency of the resin. For example, the position holding means is formed as follows. Between opposed surfaces of the mount part 113a and the turning part 113c, recesses and projections are alternately formed around an axis line of the turning part 113c, i.e., the pin 113b. When the projections on the one opposed surface are fitted in the recesses in the other opposed surface, the turning part 113c stops. When the stop position is changed, the projections on both of the opposed surfaces are resiliently deformed. In this manner, the free rotation of the turning part 113c is limited, whereby the recesses and projections can function as the position holding means. A stay fitting part 113e is formed integrally with the turning part 113c.

The hood stay 114 is a strip-like component made of a resin. By fixing both ends of the hood stay 114 on the stay fitting parts 113e of the right and left hood bases 113, the hood stay 114 is supported between the hood bases 113 so as to be curved to define an upward arch. The hood stay 114 is selectively held on one of a plurality of stop positions including an unfolded position where the hood 4 is unfolded and an accommodation position where the hood 4 is folded, by a position holding mechanism incorporated in the hood base 113.

The hood body 111 includes a screen 115 formed by cutting a hood fabric into a suitable shape, and a plurality of hood ribs 116 (three hood ribs 116 are illustrated) disposed on suitable positions on an inner surface side of the screen 115. A stretchable material is used as the hood fabric. A front end portion of the screen 115 is connected to the hood stay 114 such that the hood stay 114 is wound inside. The respective hood ribs 116 are fixed on the screen 115 in the following manner. Namely, when the screen 115 of the hood 4 is unfolded as shown in Fig. 28, the hood ribs 116 are positioned such that suitable gaps are defined therebetween in the back and forth direction of the stroller body 2. Both end portions of the hood ribs 116 are put together in the vicinity of the hood base 113 but are not fixed on the hood base 113.

Wrapping parts 117 capable of being wrapped around the handle rods 30 of the hand push frame 17 are provided on both sides of the screen 115. A position at which the wrapping part 117 is joined to the screen 115 corresponds to a position of the third hood rib 116 from the front end of the screen 115. By wrapping the right and left wrapping parts 117 around the handle rods 30 and by snap-fitting the wrapping parts 117 and the screen 115 with each other with the use of a pair of up and down snap buttons 118, both sides of the screen 115 can be connected to the handle rods 30 while the third hood rib 116 is held along the handle rods 30. Further, loop parts 115a, each of which is capable of being engaged with an outer circumference of the mount part 113a (or turning part 113c) of the hood base 113, are provided on both sides of the screen 115 where the end portions of the hood ribs 116 are put together. By engaging the loop parts 115a with the mount parts 113a, the both ends of the respective hood ribs 116 are held in substantially the vicinity of the mount parts 113a.

Furthermore, an extension part 115b extending rearward the stroller body 2 is provided on a rear end side of the screen 115. The extension part 115b is sewn like a pouch. When the back part 3b of the seat 3 is inclined, the back surface of the back part 3b can be covered with a rear end portion of the extension part 115b (see also Fig. 6). Thus, also when the back part of the seat 3 is inclined, an area thereabove can be covered with the screen 115. Between the extension part 115b and the back part 3b of the seat 3, a joining component such as a snap button may be provided for joining the extension part 115b and the back part 3b to each other, so that the seat 3 and the screen 115 can be joined to each other by using the joining component.

In the above-described hood 4, an unfolded state of the screen 115 and a folded state thereof can be switched by rotating the hood stay 114 of the hood support mechanism 110 about the pin 113b of the hood base 113. In the unfolded state of the screen 115, the hood stay 114 is held on a position that projects substantially horizontally ahead of the handle rods 30 by the position holding means disposed in the hood bases 113, so that the screen 115 is stretched in the back and forth direction with a suitable tension being applied to the screen 115. In addition, the third hood rib 116 is held along the handle rods 30 by the wrapping parts 117. By engaging the loop parts 115a with the hood bases 113, the both end portions of the respective hood ribs 116 are held in substantially the vicinity of the hood bases 113. Thus, it is not necessary to add a structure for mounting the hood ribs 116 on the hood bases 113 and holding them on predetermined positions. In addition, the screen 115 can be held in substantially the constant unfolded shape by utilizing the stretchability of the screen 115, without providing any additional component, such as a frame or a spring in the back and forth direction, for maintaining constant a gap between the hood stay 114 and the hood rib 116 or a gap between the hood ribs 116. Thus, the number of components of the hood 4 can be reduced.

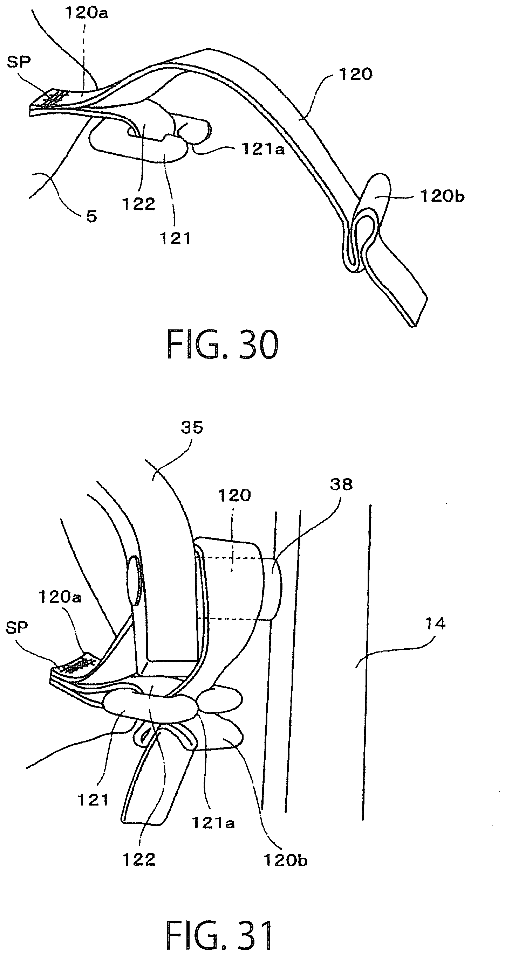

Returning to Figs. 1 to 5, the basket 5 is formed by sewing fabrics such as mesh fabrics like a box. The basket 5 is hung down from the stroller body 2 with the use of connection belts 120 disposed on four corners of an upper peripheral part of the basket 5. As shown in Fig. 8, a front side of the basket 5 is hung down from the front connection pin 38 connecting the front conjunction rod 35 and the front leg 14 by using the connection belt 120. A rear side of the basket 5 is hung down from the rear connection pin 39 connecting the rear conjunction rod 36 and the rear leg 15 by using the connection belt 120. Figs. 30 and 31 show details of the connection belt 120. The connection belt 120 is fixed on the upper peripheral part of the basket 5 by sewing a base part 120a on one end side of the connection belt 120 to the basket 5. On a distal end of the connecting belt 120, there is a stopper part 120b projecting to a front side and to a rear side of the connection belt 120. The stopper part 120b is formed by folding the connection belt 120 in a meandering manner and sewing portions of the connection belt 120 to each other. A hook 121 is fixed on a joint point of the base part 120a of the connection belt 120 through a loop belt 122. The loop belt 122, together with the base part 120a of the connection belt 120, is sewed to the basket 5 at a predetermined joint point SP. A slit 121a through which the connection belt 120 can pass is formed in an end of the hook 121.

Thus, by wrapping each connection belt 120 around the respective front connection pin 38 and the rear connection pin 39 to turn it back, and by inserting a portion nearer the base part 120a to the stopper part 120b into the hook 121 through the slit 121a, the stopper part 120b is caught by the hook 121 so that escape of the connection belt 120 from the hook 121 can be prevented. Thus, the basket 5 can be hung down from the front connection pins 38 and the rear connection pins 39 through the connection belts 120. Since the stopper part 120b is formed by folding and joining the overlapped portions of the connection belt 120 itself, the number of components required for attaching the basket 5 can be reduced, as compared with a case where an additional component for serving as a stopper is provided on the connection belt 120.

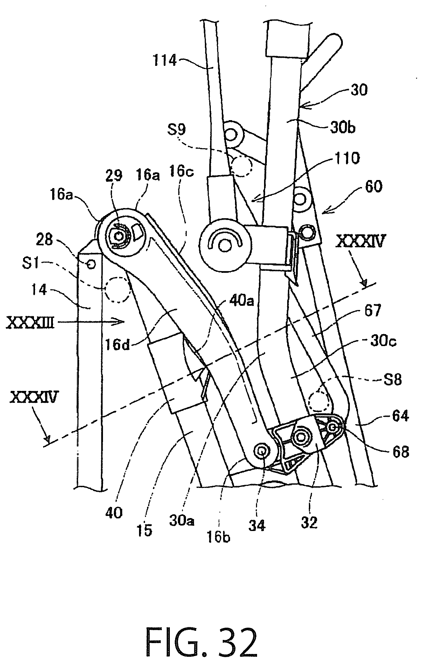

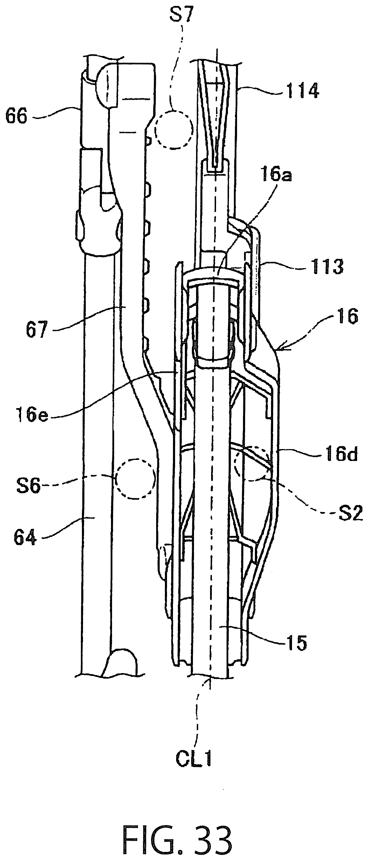

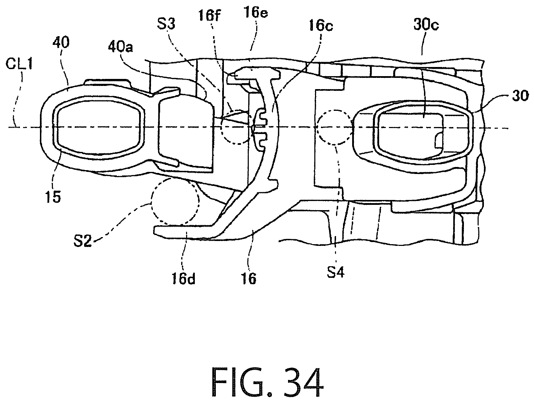

Next, the armrest 16 and a structure therearound for preventing that a finger is caught are described in detail. Fig. 32 is a side view showing in enlargement the armrest 16 and a structure therearound in the folded state, Fig. 33 is a front view seen from a direction of an arrow XXXIII of Fig. 32, and Fig. 34 is a sectional view taken along a line XXXIV - XXXIV of Fig. 32. As apparent from Fig. 32, reversely to the unfolded state, in the folded state of the stroller 1, the handle connection part 16b is diagonally inclined with respect to the leg attachment part 16a so as to be positioned below. In this case, around the leg attachment part 16a, the front leg 14 and the rear leg 15 come close to each other, and the armrest 16 covers the rear leg 15. Thus, during changing the state from the unfolded state to the folded state, when a user improperly places his/her finger on a part around the fulcrum pin 29, there is a possibility that the finger might be caught. Thus, as described above, the front leg 14 is connected to the rear leg 15 in an offset manner ahead of the fulcrum pin 29, in order that a clearance S1 is ensured between the front leg 14 and the rear leg 15 in the folded state. A size of the clearance S1 is set to be not less than a minimum value of a clearance amount required for preventing that a finger is caught (hereinafter referred to as "required clearance amount"). The required clearance amount may be set based on a certain safety value relative to an estimated range of a size of a user's finger. When a required clearance amount is determined by a safety standard for stroller or another reference standard, the value may be employed as the required clearance amount. For example, whether a clearance not less than the required clearance amount is ensured or not can be judged by imaging a circle having the required clearance amount as a diameter thereof. When there exists a clearance including the circle in the folded state, it can be judged that a clearance having a size not less than the required clearance amount is ensured. In Fig. 32, an approximate position of the clearance S1 is shown by a circular mark by an imaginary line. Herebelow, other clearances are similarly shown by circular marks in the respective drawings. Note that the circular mark in the drawings merely shows a position of the clearance, and does not show a clearance range or a clearance amount.

As apparent from Figs. 33 and 34, the armrest 16 includes the aforementioned top plate 16c and a pair of side plates 16d and 16e that are extended along both side peripheries of the top plate 16c and oriented in the right and left direction of the stroller body 2. An inside area of the armrest 16, which is surrounded by the top plate 16c and the side plates 16d and 16e, is hollow. The hollow is opened toward a lower surface side of the armrest 16, in other words, toward a side opposed to the rear leg 15. Thus, the rear leg 15 can be received inside the armrest 16 in the folded state. In order to prevent that a finger is caught between the armrest 16 and the rear leg 15, the side plates 16d and 16e of the armrest 16 are provided asymmetrically in the right and left direction with respect to a centerline CL1 of the rear leg 15 in the width direction. The side plate 16d, which is located outside in the right and left direction of the stroller 1, is provided to bulge largely outward as compared with the rear leg 15, whereby a distance from the centerline CL up to the side plate 16d is greater than a distance from the centerline CL up to the side plate 16e. Thus, under a state where a part of the rear leg 15 is received inside the armrest 16, a clearance S2 of a size not less than the required clearance amount is ensured between the rear leg 15 and the side plate 16d. Thus, even when a user places his/her finger on an inside of the side plate 16d of the armrest 16 during the folding of the stroller 1, there is no possibility that the finger is caught between the rear leg 15 and the side plate 16d.

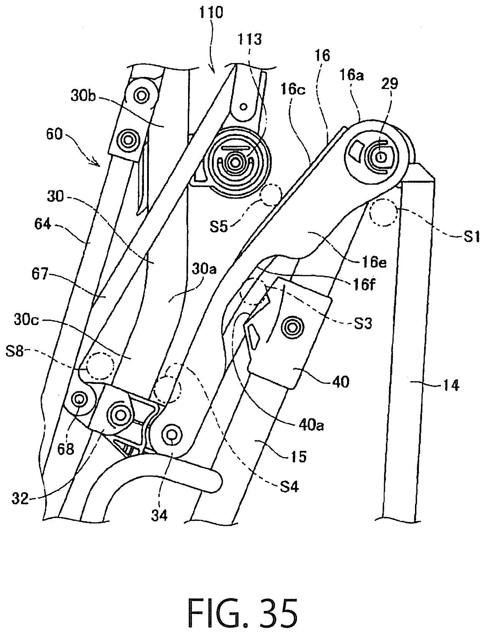

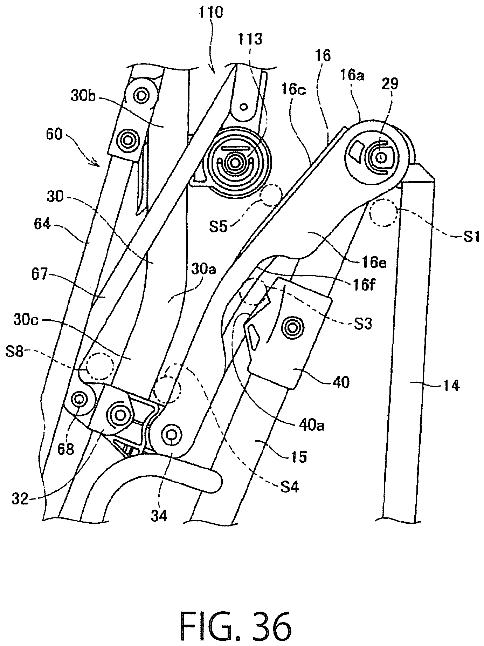

On the other hand, the inside side plate 16e is nearer to the centerline CL 1 than the side plate 16d. The reason is as follows. Since the side plate 16 is located inside, there is little possibility that a user places his/her finger on an inner surface of the side plate 16e during the folding operation. In addition, if the inside side plate 16e of the armrest 16 excessively bulges above the seat 3, a space above the seat 3 is narrowed in the right and left direction, which may impair comfortableness of a baby. However, in the folded state, the lower bracket 40 on the upper part of the rear leg 15 comes close to the armrest 16. In particular, the leg reception part 40a (see Fig. 8) is moved over the side plates 16d and 16e so as to be received inside the armrest 16. Thus, as shown in Fig. 34, a clearance S3 of a size not less than the required clearance amount is ensured between the top plate 16c and the leg reception part 40a. Further, as shown in Figs. 35 and 36, the side plate 16e is provided with a concavity 16f whose position corresponds to the lower block 40 in the folded state. Thus, the clearance S3 leads to outside the armrest 16, in more detail, outside the side plate 16e through the concavity 16f. Not limited to the position of the leg reception part 40a, the concavity 16f may be located on suitable position of the side plate 16e.

As shown in Fig. 35, the upper pin 34 connecting the handle connection part 16b of the armrest 16 and the upper bracket 32 on the upper portion of the handle rod 30 is offset ahead of the lower rod part 30c of the handle rod 30. Thus, in the folded state, a clearance S4 of a size not less than the required clearance amount is ensured between the top plate 16c of the armrest 16 and the lower rod part 30c of the handle rod 30.

In addition to the aforementioned clearances S1 to S4, clearances S5 to S14 of a size not less than the required clearance amount are ensured in the stroller 1 in order to prevent that a finger is caught. The clearances S5 to S14 are sequentially described herebelow. As shown in Fig. 35, the clearance S5 is provided between the hood base 113 of the hood support mechanism 110 and the top plate 16c of the armrest 16. As shown in Fig. 33, in the seat frame 60, the conjunction rod 67 of the back part frame 63 is bent in two steps in the right and left direction between the both end portions, whereby there are ensured the clearance S6 between an end portion on the side of the front pin 68 and the side pipe 64, and the clearance S7 between an end portion on the side of the rear pin 69 and the hood base 113 and the hood stay 114, respectively. Both end portions of the conjunction rod 67 are bent in the back and forth direction, whereby there are ensured the clearance S8 around the front pin 68, and the clearance S9 around the rear pin 69, respectively.

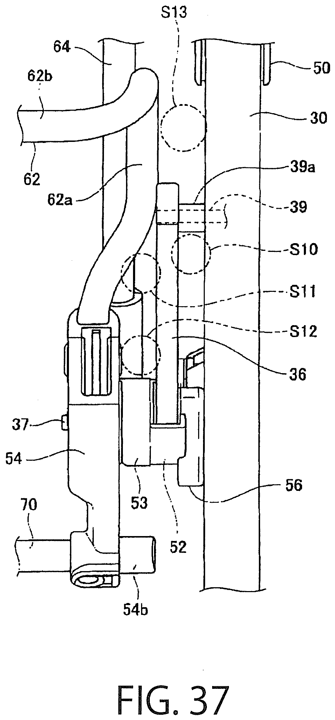

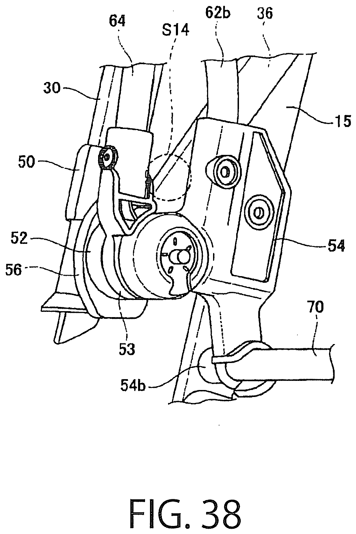

Fig. 37 is a view of a part around the lower pin 37, seen from a direction of an arrow XXXVII of Fig. 5, and Fig. 38 is a perspective view of a part around the lower pin 37, seen from inside the stroller 1. As shown in these drawings, some clearances of a size not less than the required clearance amount are ensured around the lower pin 37. As described above, the first, second and third holding members 52, 53 and 54 are disposed inside the handle rods 30 in the right and left direction along the axial direction of the lower pin 37. The rear conjunction rod 36 is fixed on the first holding member 52. The side pipe 64 of the back part frame 63 is fixed on the second holding member 53. The side pipe 62a of the seat part frame 62 is fixed on the third holding member 54. The handle rod 30 and the rear leg 15 are located on the same position with respect to the right and left direction of the stroller 1 (axial direction of the lower pin 37). The rear conjunction rod 37 is linearly extended from the first holding member 52 so as to be connected to the rear leg 15 through the rear connection pin 39. Thus, the clearance S10 is formed between the rear leg 15 and the rear conjunction rod 37. In order to maintain the clearance S10, a spacer 39a is fitted on an outer circumference of the rear connection pin 39. In addition, there are ensured the clearance S11 between the rear conjunction rod 36 and the second holding member 53 and the clearance S12 between the rear conjunction rod 36 and the side pipe 64, in accordance with the axial thicknesses of the first holding member 52 and the second holding member 53.

In order to ensure the width of the seat 3, the side pipe 62a of the seat part frame 62 connected to the third holding member 53 is bent to bulge outward in the right and left direction from the connection portion to the third holding member 54. The bending amount is limited such that there is formed the clearance S13 between the side pipe 62a and the handle rod 30. Further, as apparent from Fig. 38, the clearance S14 is ensured between the connection portion of the side pipe 64 to the second holding member 53 and the connection portion of the side pipe 62a to the third holding member 54.

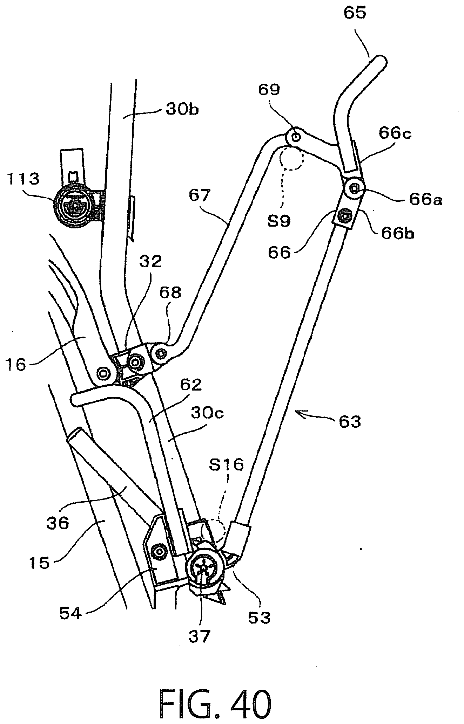

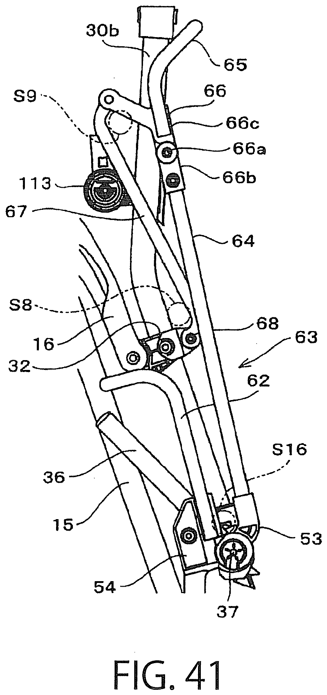

Next, a stored state of the back part 3b (see Fig. 1) in the folded state of the stroller 1 is described. As apparent from Fig. 5, when the stroller 1 is in the folded state, the back part frame 63 of the seat frame 60 (in other words, the back part 3b of the seat 3) can be moved to a storage position at which the back part frame 63 is raised up to the side of the handle rod 30 of the stroller body 2. Figs. 39 to 41 shows how the back part frame 63 is stored to the side of the handle rod 30, when the stroller 1 is in the folded state. Fig. 39 shows an projecting position at which the back part frame 63 is inclined rearward. As described above, the side pipe 64 of the back part frame 63 is connected to the handle rod 30 so as to be rotatable about the lower pin 37, and the conjunction rod 67 is connected to the handle rod 30 so as to be rotatable about the front pin 68. Thus, unless the rotation of the back part frame 63 (back part 3b), which is moved to the storage position, is limited by some means, the back part frame 63 may fall over to the projecting position by itself. Herebelow, the structure for holding the back part frame 63 on the storage position is described with reference to Fig. 42.

Fig. 42 is a view schematically showing the back part frame 63 as a four-bar rotation link mechanism. The point A represents the connection pin 66a, the point B represents the rear pin 69, the point C represents the front pin 68, the point D represents the lower pin 37. The point D corresponds to a back-part connection point, the point A corresponds to a head connection point, the point C corresponds to a front connection point, and the point B corresponds to a rear connection point. Suppose that the points C and D on the same handle rod 30 are fixed. In this case, the point A draws a rotation trajectory A about the point D, and the point B draws a rotation trajectory B about the point C. The point B is relatively rotated about the point A. However, the relative rotational motion of the point B with respect to the point A is limited. Namely, when the back part frame 63 is moved from the projecting position shown in Fig. 39 to the storage position Ps, the rotational motion about the point B is allowed until the back part frame 63 reaches a restriction position Px at which the head pipe 65 is somewhat inclined behind a position at which the connection portion the side pipe 64 and the head pipe 65 becomes linear. However, when the back part frame 63 is moved over the restriction position PX toward the storage position Ps, the point B cannot be relatively rotated about the point A by the limitation on the rotational motion between the connection parts 66b and 66c of the joint 66. In Fig. 42, when the point B reaches a point P1, the back part frame 63 is located on the restriction point Px. The position of the point B at this time is referred to as "restriction start point P1". At the restriction start point P1, the point B is defined as an intersection point of the two different trajectories, i.e., a rotation trajectory Bt about the point C and a rotation trajectory Dt about the point D. Thus, if the back part frame 63 is a completely rigid body, it is impossible that the point B moves toward the storage position Ps over the restriction start point P1. However, since the back part frame 63 is not actually a completely rigid body, the point B can move over the restriction start point P1, because the conjunction rod 67 is resiliently deformed, for example. The resilient deformation amount becomes larger, as the trajectories Bt and Dt separate from each other.

In addition, as apparent from Fig. 42, in addition to the restriction start point P1, the rotation trajectories Bt and Dt intersect with each other at an inflection point P2. A position at which the inflection point P2 and the point B conform to each other is the storage position Ps of the back part frame 63. Similarly when the point B is located at the restriction start point P1, when the point B is located at the inflection point P2, the back part frame 63 is released from the resiliently deformed state. When the point B is moved leftward in Fig. 42 over the inflection point P2 (i.e., in the direction where the back part frame 63 is stored more), the rotation trajectories Bt and Dt again separate from each other, so that the back part frame 63 is resiliently deformed. That is to say, when the point B is moved in any of the directions, the back part frame 63 is resiliently deformed, with the inflection point P2 as a boundary. A restoring force against the resilient deformation acts in a direction where the point B is returned to the inflection point P2. In this manner, the position of the back part frame 63 when the point B conforms to the inflection point P2 is set as the storage position Ps. Namely, when the back part frame 63 is moved up to the storage position Ps, the point B conforms to the inflection point P2 so that an action for holding the back part frame 63 on the storage position Ps takes place. However, when the point B is located between the restriction start point P1 and the inflection point P2, as apparent from the difference between the trajectories Bt and Dt, the resilient deformation amount of the back part frame 63 reaches a peak at an intermediate position between the points P1 and P2. Then, when the point B is moved toward the inflection point P2 over the intermediate position, the resilient deformation amount gradually decreases. The restoring force in accordance with the resilient deformation acts in a direction where the resilient deformation amount is decreased. Thus, when the point B is moved toward the point P2 over the intermediate position between the points P1 and P2, the back part frame 63 is subjected to a force for moving the back part frame 63 toward the storage position Ps. Thus, when the stroller body 2 is equipped with a stopper that restricts the motion of the back part frame 63 toward the storage position Ps, at a given position where the point B is located between the intermediate position, which is located between the points P1 and P2, and the inflection point P2, the back part frame 63 is pushed onto the stopper by the resiliently restoring force generated inside the back part frame 63. If the position is set as the storage position Ps, it is possible to generate an action for holding the back part frame 63 on the storage position Ps by the restoring force against the resilient deformation.

The aforementioned restriction position Px of the back part frame 63 is set outside a range where the inclination of the back part frame 63 can be adjusted (movable range of the back part 3b) when the stroller body 2 is in the unfolded state. That is to say, the connection structure of the connection parts 66b and 66c about the connection pin 66a is constituted such that, as long as the inclination of the back part 3b is adjusted in the unfolded state, no restriction on the rotation between the connection parts 66b and 66c of the joint 66 takes place, but when the back part frame 63 is somewhat raised up ahead of the stroller body 2 from the projecting position of Fig. 39 in the unfolded state, the back part frame 63 reaches the restriction position. Further, as shown in Figs. 39 to 41, in addition to the above-described clearances S8 and S9, the back part frame 63 is provided with a clearance S15 around the connection pin 66a of the joint 66 and a clearance S16 around the lower pin 37, as a clearance of a size not less than the required clearance amount for preventing that a finger is caught.

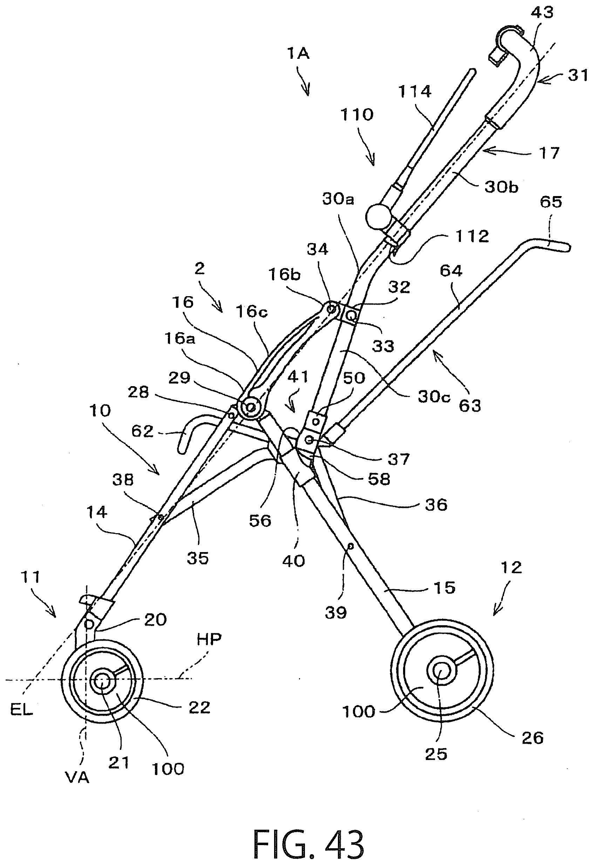

Fig. 43 is a view showing a stroller 1A according to a modification example correspondingly to Fig. 4. The stroller 1A differs from the stroller 1 in the following points. Namely, in the back part frame 63 of the seat 3, the side pipes 64 and the head pipe 65 are integrally formed with each other. The joint 66 and the conjunction rod 67 shown in Figs. 10 to 13 are omitted. The handle rod 30 and the grip rod 31 are connected to each other such that an angle therebetween cannot be adjusted, whereby the connector 45 is eliminated. The other structures are common to the stroller 1. Thus, in Fig. 42, the same parts as those of the stroller 1 are shown by the same reference numbers as those of Fig. 4, and description thereof is omitted. Similarly to Figs. 1 and 2, in the stroller 1A, the seat is applied to the seat frame, and the hood and the basket are installed thereon.

Not limited to the aforementioned embodiment and the modification example, the present invention may be carried out in various embodiments. For example, the hood 4 and the bracket 5 can be omitted. The structure of the seat 3 is not limited to the above embodiment, and a seat of various structures that are installed on a known stroller may be installed on the stroller body. The structures of the front wheel part and the rear wheel part are not limited to the above embodiment. For example, the rear wheel part may be of a dual wheel type. The rear-wheel locking mechanism can be suitably modified. The lower rod part of the handle rod may be bent once or more from the bent part to the lower end. In place of the rear conjunction member, or in addition thereto, the open/close locking mechanism may be disposed such that a relative rotation of the front conjunction member and the handle rod can be restricted. The locking member of the open/close locking mechanism is not limited to one that is remotely operated by the open/close operation part between the locked position and the released position. The open/close locking mechanism may be constituted such that a user can directly operate right and left locking members. The locking member may be provided with the locking reception groove, and the locking reception part may be provided with the locking projection, respectively.

Not limited to the aforementioned embodiment and the modification example, the present invention may be carried out in various embodiments. For example, in the above embodiment, although the wheel apparatus according to the present invention is applied to the rear wheel part, the present invention is not limited to the rear wheel but may be applied to the front wheel. A hand push cart to which the present invention is applied is not limited to the stroller in the above embodiment but may be a stroller having a different stroller body structure, or a hand push cart whose intended purpose is different from that of a stroller. The wheel apparatus of the present invention is not limited to the structure in which a single wheel is mounted on one wheel holding member through an axle. When a plurality of wheels are mounted on one axle, rotation of a part of or all of the wheels may be restricted in accordance with the present invention. Not limited to a hand push cart of four-wheel type, the present invention can be applied to a hand push cart having three wheels or less, or a hand push cart having five wheels or more.

Not limited to the aforementioned embodiment and the modification example, the present invention may be carried out in various embodiments. For example, as long as there is no problem in that the seat is formed as a sub-assembly component by applying the seat material to the seat part frame and the back part frame, the seat part frame and the back part frame may be suitably equipped with a reinforcing member that connects the side pipes in the right and left direction, in addition to the front pipe and the head pipe. The structure of the stroller body 2 is not limited to the illustrated example, a stroller body of a suitable structure may be provided. For example, the present invention can be applied to a stroller in which an extension line of a handle rod is oriented to the side of a rear wheel. The present invention can be applied to a stroller having a stroller body that cannot be folded. The seat of the present invention can be applied to a stroller not having a hood. The bracket can be omitted. The structures of the front wheel part and the rear wheel part are not limited to the above embodiment. For example, the rear wheel part may be of a dual wheel type. The rear-wheel locking mechanism can be suitably modified. Not limited to a stroller of a four-wheel type, the seat and the hood of the present invention can be applied to a stroller of a three-wheel type in which a front wheel is disposed on a center of a stroller body.

Not limited to the aforementioned embodiment and the modification example, the present invention may be carried out in various embodiments. For example, not limited to a foldable stroller, the present invention can be applied to a stroller having a stroller body that cannot be folded. The present invention can be applied to a stroller in which an extension line of a handle rod is oriented to the side of a rear wheel. Not limited to the above example, the structure of the seat can be suitably modified. The hood and the basket may be omitted. The structures of the front wheel part and the rear wheel part are not limited to the above embodiment. For example, the rear wheel part may be of a dual wheel type. Not limited to a stroller of a four-wheel type in which front legs and rear legs are respectively disposed right and left of a stroller body, the present invention can be applied to a stroller of a three-wheel type in which a front wheel is disposed on a center of the stroller body.

Not limited to the aforementioned embodiment and the modification example, the present invention may be carried out in various embodiments. For example, in the stroller of the present invention, the upper rod part of the handle rod, the armrest and the front leg extend substantially linearly in the unfolded state. However, not limited to this example, the present invention can be applied to a stroller in which an armrest is disposed to extend rearward substantially horizontally or slightly upward, from a connection point to an upper end portion of a front leg. The structure for connecting the handle rod and the rear leg is not limited to the above embodiment. As long as an armrest is inclined diagonally downward from a front end portion to a rear end portion along a rear leg in the folded state so that a lower surface side of the armrest and the rear leg come close to each other or the rear leg is partly received in the lower surface side of the armrest, the structure for making foldable the stroller can be variously modified.

Not limited to the aforementioned embodiment and the modification example, the present invention may be carried out in various embodiments. For example, in the above embodiment, the rotational motion about the pin 66a of the joint 66, in other words, the rotational motion about the head connection point A is limited within the range from the restriction position to the storage position. However, in place thereof, the rotational motion about the rear pin 69, i.e., the back-part connection point B may be limited. In this case, similarly to Fig. 42, the storage position may be set based on rotation trajectories of the pin 66a about the lower pin 37 and the front pin 68. Not limited to the pipe-like side member, the back support member of the back part may be planar or other. A single back support member may be rotatably connected to a stroller body constituent components such as the right and left handle rods at the back-part connection points. In the above embodiment, the back part is provided such that the four-bar rotation link mechanisms are provided on both side peripheries in the right and left direction of the back part. However, the four-bar rotation link mechanism may be provided only one of the side peripheries. When the four-bar rotation link mechanisms are provided on both sides, the rotational motion of the head member about one connection point may be restricted only one of the sides. However, when the rotational motion is restricted on both sides, the operations for holding the back part on the storage position can be equally generated on both sides, which advantageously ensures the back-part holding effect more reliably. The stroller body is not limited to the example of the aforementioned frame structure. As long as the back part of the seat is mounted on the stroller body so as to constitute the four-bar rotation link mechanism, the structure for making foldable the stroller body may variously modified, and the structure is not necessarily limited to the frame structure. Not limited to a stroller of a four-wheel type, the present invention can be applied to a stroller of a three-wheel type having one front wheel.

- 1, 1A: Stroller
- 2: Stroller body
- 3: Seat
- 3a: Seat part
- 3b: Back part
- 4: Hood
- 5: Basket
- 10: Frame part
- 11: Front wheel part
- 12: Rear wheel part
- 14: Front leg
- 15: Rear leg
- 16: Armrest (intermediate conjunction member)
- 16c: Top plate
- 16d: Outside side plate
- 16e: Inside side plate
- 17: Hand push frame
- 18: Step
- 18b: Step surface
- 18e: Rib
- 19: Rear lateral member
- 21: Axle
- 22: Front wheel
- 23: Locking lever
- 24: Rear-wheel holding member (wheel holding member)
- 25: Rear wheel
- 25: Axle
- 26: Rear wheel
- 29: Fulcrum pin
- 30: Handle rod
- 30a: Bent part
- 30b: Upper rod part
- 30c: Lowe rod part
- 31: Grip rod
- 32: Upper bracket
- 34: Upper pin
- 35: Front conjunction rod (front conjunction member)
- 36: Rear conjunction rod (rear conjunction member)
- 37: Lower pin (back-part connection point)
- 38: Front connection pin
- 39: Rear connection pin
- 40: Lower bracket
- 40a: Leg reception part
- 40b: Recess
- 40c: Longitudinal wall part
- 41: Open/close locking mechanism
- 42: Connection part
- 43: Grip part
- 44: Coupling part
- 45: Connector
- 48: Operation lever
- 50: Locking member
- 50a: Locking protrusion
- 52: First holding member
- 53: Second holding member
- 54: Third holding member
- 55: Connection pin
- 56: Locking reception part
- 56a: Locking reception groove
- 58: Support leg
- 59: Fitting block
- 60: Seat frame
- 61: Seat material
- 62: Seat part frame
- 62a: Side pipe
- 62b: Front pipe
- 63: Back part frame
- 64: Sid pipe (back support member, side member)
- 65: Head pipe (head member)
- 66: Joint
- 66a: Connection pin (head connection point)
- 67: Conjunction rod (conjunction member)
- 68: Front pin (front connection point)
- 69: Rear pin (rear connection point)
- 70: Seat support pipe (seat support member)
- 71: Connection belt
- 80: Rear-leg attachment part
- 81: Axle support part
- 81a: Restriction surface
- 82: Wheel body
- 82a: Hub
- 82b: Spoke
- 82c: Rim
- 82e: End surface of hub
- 84: Collar (bearing member)
- 85: Fixing member
- 86: Washer
- 90: Rear-wheel locking mechanism
- 91: Pin (pivot axis)
- 92: Operation pedal (locking operation member)
- 92a: Stopper pin (stopper part)
- 93: Projecting part
- 93a: Base part
- 93b: Enlarged part
- 94: Pin reception groove
- 100: Wheel cap
- 103: Claw
- 110: Hood support mechanism
- 111: Hood body
- 112: Hood bracket
- 113: Hood base
- 113a: Mount part
- 113c: Turning part
- 114: Hood stay
- 115: Screen
- 115a: Loop part
- 116: Hood rib
- 117: Wrapping part
- 118: Snap button
- 120: Connection belt
- 120a: Base part
- 12b: Stopper part
- 121: Hook
- 121a: Slit
- 122: Loop belt
- C1: Rotation trajectory of projecting part
- C2: Rotation trajectory of stopper pin
- EL: Extension line of upper rod part of handle rod
- HP: Imaginary horizontal plane including axle of front wheel
- S1 to S16: Clearance of size not less than required clearance amount
- SP: Joint point of connection belt
- VA: Pivot axis line of front wheel
- α, β: Tangent line
- θ: Intersection angle between tangent lines

## Claims

1. A stroller comprising:
a stroller body;
front legs (14) disposed on both sides in a right and left direction of the stroller body, each having a front wheel mounted thereon so as to be turnable about a predetermined pivot axis line;
rear legs (15) disposed on both sides in the right and left direction of the stroller body, each having a rear wheel (26) mounted thereon;
handle rods (30) disposed on both sides in the right and left direction of the stroller body, each being configured to transmit an operation of a user to the stroller body;
intermediate conjunction members (16) disposed on both sides in the right and left direction of the stroller body, each having one end portion that is rotatably connected to upper end portions of the respective front leg and the rear leg, and the other end portion that is rotatably connected to the handle rod (30); and
front conjunction members (35) disposed on both sides in the right and left direction of the stroller body, each having one end portion that is rotatably connected to the handle rod at a position (37) lower than the connection point (34) at which the handle rod is connected to the intermediate conjunction member (16), and the other end portion that is rotatably connected to the front leg at a position lower than the connection point at which the front leg is connected to the intermediate conjunction member; and
rear conjunction members (36) disposed on both sides in the right and left direction of the stroller body, each having one end portion that is rotatably connected to the handle rod at a position lower than the connection point at which the handle rod is connected to the intermediate conjunction member, and the other end portion that is rotatably connected to the rear leg at a position lower than the connection point at which the rear leg is connected to the intermediate conjunction member;
the stroller being changeable between an unfolded state and a folded state by relatively rotating the front legs, the rear legs, the handle rods, the intermediate conjunction members, the front conjunction members and the rear conjunction members about their respective connection points;
**characterized in that**
when the stroller body is seen from the right and left direction, the handle rod can be divided into two sections of an upper rod part (30b) and a lower rod part (30c) that is tilted behind with respect to an extension line (EL) of the upper rod part, with an intermediate bent part (30b) as a boundary between the upper rod part and the lower rod part;
the front conjunction member (35) and the rear conjunction member (36) are rotatably connected to the lower rod part; and
when the stroller in the unfolded state is seen from the right and left direction of the stroller body, the upper rod part (30b), the intermediate conjunction member (16) and the front leg (14) are arranged linearly.

2. The stroller according to claim 1, wherein
the upper rod part is provided such that the extension line of the upper rod part intersects with an imaginary horizontal plane including an axle (21) of the front wheel, on the axle of the front wheel or ahead thereof.

3. The stroller according to claim 1 or 2, wherein
the connection point (34) of the intermediate conjunction member and the handle rod is set on a side of the lower rod part.

4. The stroller according to any one of claims 1 to 3, further comprising an open/close locking mechanism (41) located between at least one of the front conjunction member and the rear conjunction member and the handle rod, the open/close locking mechanism being configured to switch between a state in which the handle rod and the conjunction member can be relatively rotated, and a state in which the handle rod and the conjunction member cannot be relatively rotated.

5. The stroller according to claim 4, wherein:
a lower pin (37) for connecting the handle rod and the rear
conjunction member so as to be relatively rotatable is disposed on the connection point of the handle rod and the rear conjunction member;
the open/close locking mechanism is equipped with a locking member (50) that is movable between a released position
and a locked position along the handle rod, and a locking reception part (56)
that is rotatable about the lower pin integrally with the rear conjunction member;
when the locking member is moved to the locked position, the locking member and the locking reception part are engaged with each other so as to be relatively unrotatable about the lower pin so that the relative rotation of the handle rod and the rear conjunction member becomes impossible; and
when the locking member is moved to the released position, the locking member and the locking reception part are disengaged from each other so that the relative rotation of the handle rod and the rear conjunction member becomes possible.

6. The stroller according to claim 5, wherein
when the stroller is in the unfolded state, the locking member and the locking reception part can be engaged with each other so as to be relatively unrotatable about the lower pin, and
when the stroller is in the course of being in a state between the unfolded state and the folded state, the locking member and the locking reception part cannot be engaged with each other.

7. The stroller according to claim 6, wherein
also when the stroller is in the folded state, the locking member and the locking reception part can be engaged with each other so as to be relatively unrotatable about the lower pin.

8. The stroller according to any one of claims 5 to 7, wherein
the lower pin and the rear conjunction member are both made of a metal, and
the lower pin is fitted with the respective handle rod and the rear conjunction member.

9. The stroller according to claim 8, wherein
the rear conjunction member and the rear leg are rotatably connected to each other by a rear connection pin made of a metal.

10. The stroller according to any one of claims 1 to 9, wherein the rear leg is provided with a lower bracket that receives a lower end of the handle rod from below when the stroller is in the unfolded state.

11. The stroller according to claim 10, wherein
a pair of meshing parts, which are engaged with each other in the right and left direction of the stroller body when the stroller is in the unfolded condition, are disposed between the lower end of the handle rod and the lower bracket.

12. The stroller according to any one of claims 1 to 11, wherein
a grip part, which is gradually projecting ahead of the stroller body from an outside toward an inside in the right and left direction of the stroller body, is disposed on an upper end side of the handle rod.

13. The stroller according to any one of claims 1 to 12, wherein:
a basket is hung down below the stroller body through a connection belt;
the connection belt is provided with a stopper part formed by folding and joining overlapped portions of the connection belt itself;
a hook having a slit through which the connection belt can pass is fixed on the basket;
a loop is formed by inserting the connection belt to the hook through the slit such that the connection belt is prevented from escaping from the hook by the the stopper part; and
a constituent component of the stroller body is passed through the loop so that the connection belt is latched on the stroller body.

## Patentansprüche

1. Kinderwagen umfassend:
einen Kinderwagenkörper;
Vorderbeine (14), die zu beiden Seiten, rechts und links des Kinderwagenkörpers angeordnet sind, wobei jedes ein Vorderrad aufweist, das an dem entsprechenden Bein drehbar um eine vorgegebene Drehachse montiert ist;
Hinterbein (15), die zu beiden Seiten, rechts und links des Kinderwagenkörpers angeordnet sind, wobei jedes ein Hinterrad (26) aufweist, das daran montiert ist;
Griffstangen (30), die zu beiden Seiten, rechts und links des Kinderwagenkörpers angeordnet sind und jeweils so konfiguriert sind, dass sie eine Betätigung eines Benutzers auf den Kinderwagenkörper übertragen;
Zwischenverbindungselemente (16), die zu beiden Seiten, rechts und links des Kinderwagenkörpers angeordnet sind und jeweils einen Endabschnitt aufweisen, der mit oberen Endabschnitten der jeweiligen Vorderbeine und Hinterbein drehbar verbunden ist, wobei der andere Endabschnitt mit der Griffstange (30) drehbar verbunden ist; und
vordere Verbindungselemente (35), die zu beiden Seiten, rechts und links des Kinderwagenkörpers angeordnet sind und jeweils einen Endabschnitt aufweisen, der mit der Griffstange bei einer Position (37) drehbar verbunden ist, die niedriger liegt als der Verbindungspunkt (34), an dem die Griffstange mit dem Zwischenverbindungselement (16) verbunden ist, und einen anderen Endabschnitt, der mit dem Vorderbein bei einer Position drehbar verbunden ist, die niedriger ist als der Verbindungspunkt, an dem das Vorderbein mit dem Zwischenverbindungselement verbunden ist; und
hintere Verbindungselemente (36), die auf beiden Seiten, rechts und links des Kinderwagenkörpers angeordnet sind und jeweils einen Endabschnitt aufweisen, der mit der Griffstange bei einer Position drehbar verbunden ist, die niedriger liegt als der Verbindungspunkt, an dem die Griffstange mit dem Zwischenverbindungselement verbunden ist, und einen weiteren Endabschnitt, der mit dem Hinterbein bei einer Position drehbar verbunden ist, die niedriger liegt als der Verbindungspunkt, an dem das Hinterbein mit dem Zwischenverbindungselement verbunden ist,
wobei der Kinderwagen zwischen einem ausgeklappten Zustand und einem zusammengeklappten Zustand verändert werden kann, indem die Vorderbeine, die Hinterbeine, die Griffstangen, die Zwischenverbindungselemente, die vorderen Verbindungselemente und die hinteren Verbindungselemente um ihre jeweiligen Verbindungspunkte relativ gedreht werden,
**dadurch gekennzeichnet, dass**
dann, wenn der Kinderwagen von rechts und links betrachtet wird, die Griffstange in zwei Abschnitte, einen oberen Stangenabschnitt (30b) und einen unteren Stangenabschnitt (30c), geteilt werden kann, wobei der untere Abschnitt relativ zu einer Verlängerungslinie (EL) des oberen Stangenabschnitts nach hinten geneigt ist, mit einem gebogenen Zwischenabschnitt (30b) als Grenze zwischen dem oberen Stangenabschnitt und dem unteren Stangenabschnitt,
wobei das vordere Verbindungselement (35) und das hintere Verbindungselement (36) mit dem unteren Stangenabschnitt drehbar verbunden sind, und
wobei dann, wenn der Kinderwagen im ausgeklappten Zustand ist, in Blickrichtung von rechts und links, der obere Stangenabschnitt (30b), das Zwischenverbindungselement (16) und das Vorderbein (14) in einer Linie angeordnet sind.

2. Kinderwagen nach Anspruch 1, wobei der obere Stangenabschnitt derart vorgesehen ist, dass die Verlängerungslinie des oberen Stangenabschnitts eine imaginäre horizontale Ebene, welche eine Achse (21) des Vorderrads enthält, auf der Achse des Vorderrads oder vor dieser schneidet.

3. Kinderwagen nach Anspruch 1 oder 2, wobei der Verbindungspunkt (34) des Zwischenverbindungselementes und der Griffstange auf einer Seite des unteren Stangenabschnitts liegen.

4. Kinderwagen nach einem der Ansprüche 1 bis 3 mit ferner einem Öffnungs-SchließVerriegelungsmechanismus (14), der zwischen wenigstens dem vorderen Verbindungselement und dem hinteren Verbindungselement und der Griffstange liegt, wobei der Öffnungs-Schließ-Verriegelungsmechanismus so konfiguriert ist, dass er zwischen einem Zustand, in dem die Griffstange und das Verbindungselement relativ zueinander gedreht werden können, und einem Zustand, in dem die Griffstange und das Verbindungselement nicht relativ zueinander gedreht werden können, umschaltet.

5. Kinderwagen nach Anspruch 4, wobei ein unterer Stift (37) zur Verbindung der Griffstange und des hinteren Verbindungselementes, sodass diese relativ zueinander drehbar sind, an dem Verbindungspunkt der Griffstange und des hinteren Verbindungselementes angeordnet ist;
der Öffnungs-Schließ-Verriegelungsmechanismus mit einem Verriegelungselement (50) ausgestattet ist, das zwischen einer gelösten Position und einer verriegelten Position entlang der Griffstange bewegbar ist, und mit einem Verriegelungsaufnahmeabschnitt (56), der um den unteren Stift integral mit dem hinteren Verbindungselement drehbar ist;
wobei dann, wenn das Verriegelungselement in die verriegelte Position bewegt wird, das Verriegelungselement und der Verriegelungsaufnahmeabschnitt miteinander in Eingriff kommen, sodass sie nicht relativ drehbar um den unteren Stift sind, sodass die relative Drehung der Griffstange und des hinteren Verbindungselementes unmöglich wird; und
wobei dann, wenn das Verriegelungselement in die gelöste Position bewegt wird, das Verriegelungselement und der Verriegelungsaufnahmeabschnitt voneinander gelöst werden, sodass die Relativdrehung der Griffstange und des hinteren Verbindungselementes möglich wird.

6. Kinderwagen nach Anspruch 5, wobei
dann, wenn der Kinderwagen in dem aufgeklappten Zustand ist, das Verriegelungselement und der Verriegelungsaufnahmeabschnitt miteinander in Eingriff gebracht werden können, sodass sie nicht um den unteren Stift drehbar sind, und
dann, wenn der Kinderwagen sich in einem Zustand zwischen dem aufgeklappten Zustand und dem zusammengeklappten Zustand befindet, das Verriegelungselement und der Verriegelungsaufnahmeabschnitt nicht in Eingriff gebracht werden können.

7. Kinderwagen nach Anspruch 6, wobei
auch dann, wenn der Kinderwagen in dem zusammengeldappten Zustand ist, das Verriegelungselement und der Verriegelungsaufnahmeabschnitt miteinander in Eingriff gebracht werden können, sodass sie nicht um den unteren Stift drehbar sind.

8. Kinderwagen nach einem der Ansprüche 5 bis 7, wobei
der untere Stift und das hintere Verbindungselement beide aus Metall bestehen und
der untere Stift mit der Griffstange und dem hinteren Verbindungselement zusammenpasst.

9. Kinderwagen nach Anspruch 8, wobei
das hintere Verbindungselement und das Hinterbein durch einen hinteren Verbindungsstift aus Metall drehbar miteinander verbunden sind.

10. Kinderwagen nach einem der Ansprüche 1 bis 9, wobei das Hinterbein eine untere Klammer aufweist, die ein unteres Ende der Griffstange von unten aufnimmt, wenn der Kinderwagen in dem ausgeklappten Zustand ist.

11. Kinderwagen nach Anspruch 11, wobei
ein Paar Eingriffsteile, die in Richtung rechts und links des Kinderwagenkörpers mit-einander in Eingriff sind, wenn der Kinderwagen in dem aufgeldappten Zustand ist, zwischen dem unteren Ende der Griffstange und der unteren Klammer angeordnet sind.

12. Kinderwagen nach einem der Ansprüche 1 bis 11, wobei
ein Griffteil am oberen Ende der Griffstange angeordnet ist, wobei der Griffteil von außen nach innen, rechts und links des Kinderwagenkörpers graduell von dem Kinderwagenkörper vorsteht.

13. Kinderwagen nach einem der Ansprüche 1 bis 12, wobei ein Korb unterhalb des Kinderwagenkörpers über einen Verbindungsriemen aufgehängt ist,
der Verbindungsriemen einen Stopper-Abschnitt aufweist, der durch Falten und Verbinden überlappender Abschnitte des Verbindungsriemens gebildet ist;
ein Haken mit einem Schlitz, durch den der Verbindungsriemen gehen kann, an dem Korb befestigt ist,
eine Schlaufe durch Einfügen des Verbindungsriemens in den Haken durch den Schlitz gebildet ist, sodass der Verbindungsriemen mit Hilfe des Stopper-Abschnitts nicht aus dem Haken entweichen kann; und
ein Bestandteil des Kinderwagenkörpers durch die Schlaufe geht, sodass der Verbindungsriemen an dem Kinderwagenkörper verriegelt ist.

## Revendications

1. Poussette comprenant :
un corps de poussette ;
des jambes avant (14) disposées des deux côtés dans une direction droite et gauche du corps de poussette, chacune ayant une roue avant montée sur celle-ci de manière à pouvoir être orientée autour d'une ligne d'axe de pivotement prédéterminée ;
des jambes arrière (15) disposées des deux côtés dans la direction droite et gauche du corps de poussette, chacune ayant une roue arrière (26) montée sur celle-ci ;
des barres de poignée (30) disposées des deux côtés dans la direction droite et gauche du corps de poussette, chacune étant configurée pour transmettre une opération d'un utilisateur au corps de poussette ;
des éléments de conjonction intermédiaires (16) disposés des deux côtés dans la direction droite et gauche du corps de poussette, chacun ayant une partie d'extrémité qui est reliée de manière orientable aux parties d'extrémité supérieures de la jambe avant et de la jambe arrière respectives, et l'autre partie d'extrémité qui est reliée de manière orientable à la barre de poignée (30) ;
et
des éléments de conjonction avant (35) disposés des deux côtés dans la direction droite et gauche du corps de poussette, chacun ayant une partie d'extrémité qui est reliée de manière orientable à la barre de poignée à une position (37) inférieure au point de connexion (34) auquel la barre de poignée est reliée à l'élément de conjonction intermédiaire (16), et l'autre partie d'extrémité qui est reliée de manière orientable à la jambe avant à une position inférieure au point de connexion auquel la jambe avant est reliée à l'élément de conjonction intermédiaire ; et
des éléments de conjonction arrière (36) disposés des deux côtés dans la direction droite et gauche du corps de poussette, chacun ayant une partie d'extrémité qui est reliée de manière orientable à la barre de poignée à une position inférieure au point de connexion auquel la barre de poignée est reliée à l'élément de conjonction intermédiaire, et l'autre partie d'extrémité qui est reliée de manière orientable à la jambe arrière à une position inférieure au point de connexion auquel la jambe arrière est reliée à l'élément de conjonction intermédiaire ;
la poussette étant modifiable entre un état déplié et un état plié en faisant tourner réciproquement les jambes avant, les jambes arrière, les barres de poignée, les éléments de conjonction intermédiaires, les éléments de conjonction avant et les éléments de conjonction arrière autour de leurs points de connexion respectifs ;
**caractérisée en ce que**
quand le corps de poussette est vu depuis la direction droite et gauche, la barre de poignée peut être divisée en deux sections d'une partie de barre supérieure (30b) et d'une partie de barre inférieure (30c) qui est inclinée vers l'arrière par rapport à une ligne d'extension (EL) de la partie de barre supérieure, avec une partie pliée intermédiaire (30b) en tant que limite entre la partie de barre supérieure et la partie de barre inférieure ;
l'élément de conjonction avant (35) et l'élément de conjonction arrière (36) sont reliés de manière orientable à la partie de barre inférieure ; et
quand la poussette dans l'état déplié est vue depuis la direction droite et gauche du corps de poussette, la partie de barre supérieure (30b), l'élément de conjonction intermédiaire (16) et la jambe avant (14) sont disposés de manière linéaire.

2. Poussette selon la revendication 1, dans laquelle
la partie de barre supérieure est configurée de sorte que la ligne d'extension de la partie de barre supérieure coupe un plan horizontal imaginaire incluant un axe (21) de la roue avant, sur l'axe de la roue avant ou devant celui-ci.

3. Poussette selon la revendication 1 ou 2, dans laquelle
le point de connexion (34) de l'élément de conjonction intermédiaire et de la barre de poignée est placé sur un côté de la partie de barre inférieure.

4. Poussette selon l'une quelconque des revendications 1 à 3, comprenant en outre un mécanisme de verrouillage ouvert/fermé (41) situé entre au moins l'un parmi l'élément de conjonction avant et l'élément de conjonction arrière et la barre de poignée, le mécanisme de verrouillage ouvert/fermé étant configuré pour alterner entre un état dans lequel la barre de poignée et l'élément de conjonction peuvent être tournés relativement et un état dans lequel la barre de poignée et l'élément de conjonction ne peuvent pas être tournés relativement.

5. Poussette selon la revendication 4, dans laquelle :
une broche inférieure (37) pour relier la barre de poignée et l'élément de conjonction arrière de sorte qu'ils soient orientables réciproquement est disposée sur le point de connexion de la barre de poignée et de l'élément de conjonction arrière ;
le mécanisme de verrouillage ouvert/fermé est équipé d'un élément de verrouillage (50) qui est mobile entre une position déverrouillée et une position verrouillée le long de la barre de poignée, et une partie de réception de verrouillage (56) qui est orientable autour de la broche inférieure de manière solidaire avec l'élément de conjonction arrière ;
quand l'élément de verrouillage est placé dans la position verrouillée, l'élément de verrouillage et la partie de réception de verrouillage sont en prise l'un avec l'autre de manière à être relativement non orientables autour de la broche inférieure de façon que la rotation relative de la barre de poignée et de l'élément de conjonction arrière devienne impossible ; et
quand l'élément de verrouillage est placé dans la position déverrouillée, l'élément de verrouillage et la partie de réception de verrouillage sont désengagés l'un de l'autre de façon que la rotation relative de la barre de poignée et de l'élément de conjonction arrière devienne possible.

6. Poussette selon la revendication 5, dans laquelle
quand la poussette se trouve dans l'état déplié, l'élément de verrouillage et la partie de réception de verrouillage peuvent être mis en prise l'un avec l'autre de manière à être relativement non orientables autour de la broche inférieure, et
quand la poussette est en train de passer par un état entre l'état déplié et l'état plié, l'élément de verrouillage et la partie de réception de verrouillage ne peuvent pas être mis en prise l'un avec l'autre.

7. Poussette selon la revendication 6, dans laquelle
en outre, quand la poussette se trouve dans l'état plié, l'élément de verrouillage et la partie de réception de verrouillage peuvent être mis en prise l'un avec l'autre de manière à être relativement non orientables autour de la broche inférieure.

8. Poussette selon l'une quelconque des revendications 5 à 7, dans laquelle
la broche inférieure et l'élément de conjonction arrière sont tous les deux constitués d'un métal, et
la broche inférieure est adaptée sur la barre de poignée et l'élément de conjonction arrière respectifs.

9. Poussette selon la revendication 8, dans laquelle
l'élément de conjonction arrière et la jambe arrière sont reliés de manière orientable l'un à l'autre par une broche de connexion arrière constituée d'un métal.

10. Poussette selon l'une quelconque des revendications 1 à 9, dans laquelle la jambe arrière est dotée d'un support inférieur qui reçoit une extrémité inférieure de la barre de poignée depuis le dessous quand la poussette se trouve dans l'état déplié.

11. Poussette selon la revendication 10, dans laquelle
une paire de parties d'engrènement, qui sont mises en prise l'une avec l'autre dans la direction droite et gauche du corps de poussette quand la poussette se trouve dans l'état déplié, sont disposées entre l'extrémité inférieure de la barre de poignée et le support inférieur.

12. Poussette selon l'une quelconque des revendications 1 à 11, dans laquelle
une partie de préhension, qui fait saillie progressivement devant le corps de poussette depuis un extérieur vers un intérieur dans la direction droite et gauche du corps de poussette, est disposée sur un côté d'extrémité supérieure de la barre de poignée.

13. Poussette selon l'une quelconque des revendications 1 à 12, dans laquelle
un panier est suspendu au-dessous du corps de poussette par une ceinture de connexion ;
la ceinture de connexion est pourvue d'une partie de butée formée en pliant et en joignant les parties superposées de la ceinture de connexion elle-même ;
un crochet ayant une fente à travers laquelle la ceinture de connexion peut passer est fixé sur le panier ;
une boucle est formée en insérant la ceinture de connexion jusqu'au crochet à travers la fente de sorte que la partie de butée empêche la ceinture de connexion de sortir du crochet ; et
un composant constituant du corps de poussette est passé à travers la boucle de sorte que la ceinture de connexion est accrochée au corps de poussette.
